(19) Europäisches Patentamt / European Patent Office / Office européen des brevets

(11) **EP 4 064 276 A1**

(12) **EUROPEAN PATENT APPLICATION**
published in accordance with Art. 153(4) EPC

(43) Date of publication:
**28.09.2022 Bulletin 2022/39**

(21) Application number: **20910138.5**

(22) Date of filing: **30.10.2020**

(51) International Patent Classification (IPC):
**G10L 15/06** (2013.01)      **G10L 15/00** (2013.01)

(86) International application number:
**PCT/CN2020/125608**

(87) International publication number:
**WO 2021/135611 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2019 CN 201911409041**

(71) Applicant: **Huawei Technologies Co., Ltd.
Shenzhen, Guangdong 518129, (CN)**

(72) Inventor: **GENG, Jie
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND DEVICE FOR SPEECH RECOGNITION, TERMINAL AND STORAGE MEDIUM**

(57)     This application is applicable to the field of data processing technologies, and provides an artificial intelligence (Artificial Intelligence, AI)-based speech recognition method and apparatus, a terminal, and a storage medium. The method includes: obtaining a to-be-recognized target speech signal; determining a target language type of the target speech signal; and outputting text information of the target speech signal by using a real-time speech recognition model corresponding to the target language type. The real-time speech recognition model is obtained by training a training set including an original speech signal and an extended speech signal, and the extended speech signal is obtained by converting an existing text of a basic language type. According to technical solutions provided in this application, a quantity of samples required for training a real-time speech recognition model of a non-basic language can be increased, to improve accuracy and applicability of speech recognition.

```
                          ┌─ S301
┌──────────────────────────────────────────────┐
│   Obtain a to-be-recognized target speech signal │
└──────────────────────────────────────────────┘
                          │
                          ▼   ┌─ S302
┌──────────────────────────────────────────────┐
│ Determine a target language type of the target speech signal │
└──────────────────────────────────────────────┘
                          │
                          ▼   ┌─ S303
┌──────────────────────────────────────────────┐
│ Input the target speech signal into a speech recognition model │
│ corresponding to the target language type, to obtain text information │
│        output by the speech recognition model        │
└──────────────────────────────────────────────┘
```

FIG. 3

EP 4 064 276 A1

**Description**

This application claims priority to Chinese Patent Application No. 201911409041.5, filed with the China National Intellectual Property Administration on December 31, 2019 and entitled "SPEECH RECOGNITION METHOD AND APPARATUS, TERMINAL, AND STORAGE MEDIUM", which is incorporated herein by reference in its entirety.

**TECHNICAL FIELD**

This application belongs to the field of data processing technologies, and in particular, to a speech recognition method and apparatus, a terminal, and a storage medium.

**BACKGROUND**

With development of terminal device technologies, a speech recognition technology is applied in a plurality of different fields as an important human-computer interaction manner. How to improve accuracy and applicability of speech recognition becomes increasingly important. In an existing speech recognition technology, recognition accuracy is relatively high because a quantity of samples of a basic language type is relatively large, but recognition accuracy is low because a quantity of samples of a non-basic language type such as a dialect and a minority language is relatively small. Consequently, in the existing speech recognition technology, recognition accuracy is low for the non-basic language type, and applicability of the speech recognition technology is affected.

**SUMMARY**

Embodiments of this application provide a speech recognition method and apparatus, a terminal, and a storage medium, to resolve problems of low recognition accuracy and poor applicability for a non-basic language in an existing speech recognition technology.

According to a first aspect, an embodiment of this application provides a speech recognition method, including:

obtaining a to-be-recognized target speech signal;
determining a target language type of the target speech signal; and
inputting the target speech signal into a speech recognition model corresponding to the target language type, to obtain text information output by the speech recognition model, where
the speech recognition model is obtained by training a training sample set, where the training sample set includes a plurality of extended speech signals, extended text information corresponding to each extended speech signal, an original speech signal corresponding to each extended speech signal, and original text information corresponding to each original speech signal, and the extended speech signal is obtained by converting an existing text of a basic language type.

In a possible implementation of the first aspect, before the inputting the target speech signal into a speech recognition model corresponding to the target language type, to obtain text information output by the speech recognition model, the method further includes:

obtaining the existing text corresponding to the basic language type;
converting the existing text into an extended speech text corresponding to the target language type; and
generating the extended speech signal corresponding to the extended speech text.

In a possible implementation of the first aspect, before the inputting the target speech signal into a speech recognition model corresponding to the target language type, to obtain text information output by the speech recognition model, the method further includes:

training a first native speech model by using the original speech signal and an original language text corresponding to the original speech signal in the training set, to obtain an asynchronous speech recognition model;
outputting, based on the asynchronous speech recognition model, a pronunciation probability matrix corresponding to the extended speech signal; and
training a second native speech model based on the pronunciation probability matrix and the extended speech signal, to obtain a real-time speech recognition model.

In a possible implementation of the first aspect, the training a second native speech model based on the pronunciation probability matrix and the extended speech signal, to obtain a real-time speech recognition model includes:

performing coarse-grained training on the second native speech model based on the pronunciation probability matrix and the extended speech signal, to obtain a quasi-real-time speech model; and
performing fine-grained training on the quasi-real-time speech model based on the original speech signal and the original language text, to obtain the real-time speech recognition model.

In a possible implementation of the first aspect, the performing coarse-grained training on the second native speech model based on the pronunciation probability matrix and the extended speech text, to obtain a quasi-real-time speech model includes:

importing the extended speech signal into the second native speech model, and determining a prediction probability matrix corresponding to the extended speech signal;
importing the pronunciation probability matrix and the prediction probability matrix into a preset loss function, and calculating a loss amount of the second native speech model; and
adjusting a network parameter in the second native speech model based on the loss amount, to obtain the quasi-real-time speech recognition model.

In a possible implementation of the first aspect, the loss function is specifically:

$$\begin{cases} Loss_{top\_k} = -\dfrac{1}{T}\sum_{t=1}^{T}\sum_{c=1}^{C}\widehat{y}_c^t \cdot \log(p_c^t) \\ \widehat{y}_c^t = \begin{cases} y_c^t \Rightarrow \arg\underset{c}{sort}(y_c^t) \le K \\ 0 \Rightarrow else \end{cases} \end{cases},$$

where

$Loss_{top\_k}$ is the loss amount; $p_c^t$ is a probability value that is of a $c^{th}$ pronunciation corresponding to a $t^{th}$ frame in the extended speech signal and that is in the prediction probability matrix; $\widehat{y}_c^t$ is a probability value that is of the $c^{th}$ pronunciation corresponding to the $t^{th}$ frame in the extended speech signal and that is in the pronunciation probability matrix processed by using an optimization algorithm; T is a total quantity of frames; C is a total quantity of pronunciations recognized in the $t^{th}$ frame; $y_c^t$ is a probability value that is of the $c^{th}$ pronunciation corresponding to the $t^{th}$ frame in the extended speech signal and that is in the pronunciation probability matrix; $\arg\underset{c}{sort}(y_c^t)$ is a sequence number corresponding to the $c^{th}$ pronunciation after all pronunciations that correspond to the $t^{th}$ frame in the extended speech signal and that are in the pronunciation probability matrix are sorted in descending order of probability values; and K is a preset parameter.

In a possible implementation of the first aspect, there are more first network layers in the asynchronous speech recognition model than second network layers in the real-time speech recognition model.

In a possible implementation of the first aspect, the inputting the target speech signal into a speech recognition model corresponding to the target language type, to obtain text information output by the speech recognition model includes:

dividing the target speech signal into a plurality of audio frames;
performing discrete Fourier transform on each audio frame to obtain a speech spectrum corresponding to each audio frame; and
importing, based on a frame number, the speech spectrum corresponding to each audio frame into the real-time speech recognition model, and outputting the text information.

In a possible implementation of the first aspect, after the inputting the target speech signal into a speech recognition model corresponding to the target language type, to obtain text information output by the speech recognition model, the method further includes:
importing the target speech signal into a training set corresponding to the target language type.

According to a second aspect, an embodiment of this application provides a speech recognition apparatus, including:

a target speech signal obtaining unit, configured to obtain a to-be-recognized target speech signal;
a target language type recognition unit, configured to determine a target language type of the target speech signal; and
a speech recognition unit, configured to input the target speech signal into a speech recognition model corresponding to the target language type, to obtain text information output by the speech recognition model, where
the speech recognition model is obtained by training a training sample set, where the training sample set includes a plurality of extended speech signals, extended text information corresponding to each extended speech signal, an original speech signal corresponding to each extended speech signal, and original text information corresponding to each original speech signal, and the extended speech signal is obtained by converting an existing text of a basic language type.

According to a third aspect, an embodiment of this application provides a terminal device, including a memory, a processor, and a computer program that is stored in the memory and that is run on the processor. When executing the computer program, the processor implements the speech recognition method according to any one of the implementations of the first aspect.

According to a fourth aspect, an embodiment of this application provides a computer-readable storage medium. The computer-readable storage medium stores a computer program, and when the computer program is executed by a processor, the speech recognition method according to any one of the implementations of the first aspect is implemented.

According to a fifth aspect, an embodiment of this application provides a computer program product. When the computer program product is run on a terminal device, the terminal device is enabled to perform the speech recognition method according to any one of the implementations of the first aspect.

It may be understood that, for beneficial effects of the second aspect to the fifth aspect, refer to related descriptions in the first aspect. Details are not described herein again.

Compared with the current technology, the embodiments of this application have the following beneficial effects:

In the embodiments of this application, a basic language text with a relatively large quantity of samples is converted into an extended speech signal, and a real-time speech recognition model corresponding to a target language type is trained by using an original speech signal and an extended speech signal that correspond to the target language type. In addition, speech recognition is performed on a target speech signal by using the trained real-time speech recognition model, to output text information. In this way, a quantity of samples required for training a real-time speech recognition model of a non-basic language can be increased, to improve accuracy and applicability of speech recognition.

## BRIEF DESCRIPTION OF DRAWINGS

FIG. 1 is a block diagram of a partial structure of a mobile phone according to an embodiment of this application;
FIG. 2 is a schematic diagram of a software structure of a mobile phone according to an embodiment of this application;
FIG. 3 is an implementation flowchart of a speech recognition method according to a first embodiment of this application;
FIG. 4 is a schematic structural diagram of a speech recognition system according to an embodiment of this application;
FIG. 5 is an interaction flowchart of a speech recognition system according to an embodiment of this application;
FIG. 6 is a specific implementation flowchart of a speech recognition method according to a second embodiment of this application;
FIG. 7 is a schematic diagram of conversion of an extended speech text according to an embodiment of this application;
FIG. 8 is a specific implementation flowchart of a speech recognition method according to a third embodiment of this application;
FIG. 9 is a schematic structural diagram of an asynchronous speech recognition model and a real-time speech recognition model according to an embodiment of this application;
FIG. 10 is a specific implementation flowchart of S803 in a speech recognition method according to a fourth embodiment of this application;
FIG. 11 is a specific implementation flowchart of S1001 in a speech recognition method according to a fifth embodiment of this application;

FIG. 12 is a schematic diagram of a training process of a real-time speech model according to an embodiment of this application;

FIG. 13 is a specific implementation flowchart of S303 in a speech recognition method according to a sixth embodiment of this application;

FIG. 14 is a specific implementation flowchart of a speech recognition method according to a seventh embodiment of this application;

FIG. 15 is a structural block diagram of a speech recognition device according to an embodiment of this application; and

FIG. 16 is a schematic diagram of a terminal device according to another embodiment of this application.

## DESCRIPTION OF EMBODIMENTS

In the following description, for description rather than limitation, specific details such as a particular system structure and a technology are provided to make a thorough understanding of the embodiments of this application. However, a person skilled in the art should know that this application can also be implemented in other embodiments without these specific details. In other cases, detailed description of well-known systems, apparatuses, circuits, and methods are omitted, so that this application is described without being obscured by unnecessary details.

It should be understood that the term "include" used in the specification and the appended claims of this application indicates presence of the described features, integers, steps, operations, elements, and/or components, without excluding presence or addition of one or more other features, integers, steps, operations, elements, components, and/or collections thereof.

It should also be understood that the term "and/or" used in the specification and the appended claims of this application indicates and includes any or all possible combinations of one or more associated listed items.

As used in the specification and the appended claims of this application, the term "if' may be interpreted as "when" or "once" or "in response to determining" or "in response to detecting". Similarly, the phrase "if it is determined that" or "if (the described condition or event) is detected" may be interpreted as a meaning of "once determined that" or "in response to determining" or "once (the described condition or event) is detected" or "in response to detecting (the described condition or event)".

In addition, in the description of the specification and the appended claims of this application, the terms "first", "second", "third", and the like are merely used for distinguishing descriptions, and shall not be understood as indicating or implying relative importance.

Reference to "an embodiment", "some embodiments", or the like described in this specification of this application indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized in other ways. The terms "include", "comprise", "have", and their variants all mean "include but are not limited to", unless otherwise specifically emphasized in other ways.

A speech recognition method provided in the embodiments of this application may be applied to a terminal device such as a mobile phone, a tablet computer, a wearable device, a vehicle-mounted device, an augmented reality (augmented reality, AR)/a virtual reality (virtual reality, VR) device, a notebook computer, an ultra-mobile personal computer (ultra-mobile personal computer, UMPC), a netbook, or a personal digital assistant (personal digital assistant, PDA), or may be further applied to a database, a server, or a service response system based on terminal artificial intelligence, to respond to a speech recognition request. A specific type of the terminal device is not limited in the embodiments of this application.

For example, the terminal device may be a station (STAION, ST) in a WLAN, a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, a computer, a laptop computer, a handheld communications device, a handheld computing device, and/or another device for communicating in a wireless system and a next-generation communications system, for example, a mobile terminal in a 5G network or a mobile terminal in a future evolved public land mobile network (Public Land Mobile Network, PLMN).

As an example rather than a limitation, when the terminal device is a wearable device, the wearable device may alternatively be a general term of a wearable device that is developed by using a wearable technology to intelligently design daily wear, such as glasses, gloves, watches, clothing, and shoes. The wearable device is a portable device that is directly worn on a body or integrated into clothes or accessories of a user, and is attached to the user to collect an atrial fibrillation signal of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

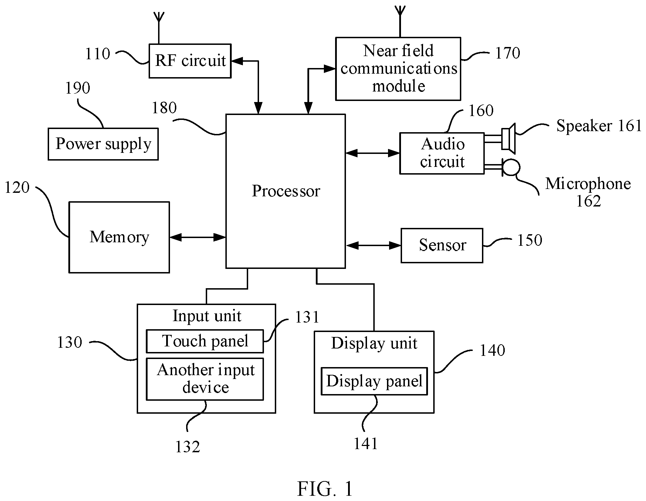

For example, the terminal device is a mobile phone. FIG. 1 is a block diagram of a partial structure of a mobile phone according to an embodiment of this application. Referring to FIG. 1, the mobile phone includes components such as a radio frequency (Radio Frequency, RF) circuit 110, a memory 120, an input unit 130, a display unit 140, a sensor 150, an audio circuit 160, a near field communications module 170, a processor 180, and a power supply 190. A person skilled in the art may understand that a structure of the mobile phone shown in FIG. 1 does not constitute a limitation on the mobile phone. The mobile phone may include more or fewer components than those shown in the figure, or may include a combination of some components, or may include different component arrangements.

The following describes each component of the mobile phone in detail with reference to FIG. 1.

The RF circuit 110 may be configured to receive and send a signal in an information receiving or sending process or a call process. Particularly, after receiving downlink information from a base station, the RF circuit 110 sends the downlink information to the processor 180 for processing, and in addition, sends designed uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the RF circuit 110 may further communicate with a network and another device through wireless communication. Any communication standard or protocol may be used for the wireless communication, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an e-mail, a short message service (Short Messaging Service, SMS), and the like. A speech signal collected by another terminal is received by using the RF circuit 110, and the speech signal is recognized, to output corresponding text information.

The memory 120 may be configured to store a software program and a module. The processor 180 executes various functional applications of the mobile phone and data processing by running the software program and the module stored in the memory 120, for example, stores a trained real-time speech recognition algorithm in the memory 120. The memory 120 may mainly include a program storage area and a data storage area. The program storage area may store an operating system, an application program (such as a sound playing function or an image playing function) that is required by at least one function, and the like; and the data storage area may store data (such as audio data or a phonebook) that is created based on use of the mobile phone, and the like. In addition, the memory 120 may include a high-speed random access memory, and may further include a non-volatile memory, for example, at least one magnetic disk storage device, a flash memory, or another volatile solid-state storage device.

The input unit 130 may be configured to: receive entered digit or character information, and generate a key signal input related to a user setting and function control of the mobile phone 100. Specifically, the input unit 130 may include a touch panel 131 and other input devices 132. The touch panel 131, also referred to as a touchscreen, may collect a touch operation (for example, an operation performed by a user on the touch panel 131 or near the touch panel 131 by using any proper object or accessory such as a finger or a stylus) of the user on or near the touch panel 131, and drive a corresponding connection apparatus based on a preset program.

The display unit 140 may be configured to display information entered by the user or information provided for the user and various menus of the mobile phone, for example, output the text information after speech recognition. The display unit 140 may include a display panel 141. Optionally, the display panel 141 may be configured by using a liquid crystal display (Liquid Crystal Display, LCD), an organic light-emitting diode (Organic Light-Emitting Diode, OLED), or the like. Further, the touch panel 131 may cover the display panel 141. After detecting the touch operation on or near the touch panel 131, the touch panel 131 transmits the touch operation to the processor 180 to determine a type of a touch event, and then the processor 180 provides a corresponding visual output on the display panel 141 based on the type of the touch event. Although, in FIG. 1, the touch panel 131 and the display panel 141 are used as two separate parts to implement input and output functions of the mobile phone, in some embodiments, the touch panel 131 and the display panel 141 may be integrated to implement the input and output functions of the mobile phone.

The mobile phone 100 may further include at least one sensor 150, for example, a light sensor, a motion sensor, and another sensor. Specifically, the light sensor may include an ambient light sensor and a proximity sensor. The ambient light sensor may adjust luminance of the display panel 141 based on brightness of ambient light. The proximity sensor may turn off the display panel 141 and/or backlight when the mobile phone moves to an ear. As a type of motion sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Other sensors such as a gyroscope, a barometer, a hygrometer, a thermometer, or an infrared sensor may further be configured in the mobile phone. Details are not described herein again.

The audio frequency circuit 160, a speaker 161, and a microphone 162 may provide an audio interface between the user and the mobile phone. The audio frequency circuit 160 may convert received audio data into an electrical signal, and transmit the electrical signal to the speaker 161, and the speaker 161 converts the electrical signal into a sound signal for output. In addition, the microphone 162 converts a collected sound signal into an electrical signal. The audio frequency circuit 160 receives the electrical signal, converts the electrical signal into audio data, and then outputs the audio data to the processor 180 for processing. The processor 180 sends the audio data to, for example, another mobile phone by using the RF circuit 110, or outputs the audio data to the memory 120 for further processing. For example, the terminal device may collect the target speech signal of the user by using the microphone 162, and send the converted electrical signal to the processor of the terminal device for speech recognition.

The terminal device may receive, by using the near field communications module 170, an atrial fibrillation signal sent by another device. For example, the near field communications module 170 is integrated with a Bluetooth communications module, establishes a communication connection to a wearable device by using the Bluetooth communications module, and receives a target speech signal fed back by the wearable device. Although FIG. 1 shows the near field communications module 170, it may be understood that the near field communications module 170 is not a mandatory component of the mobile phone 100, and the near field communications module 170 may be omitted as required, provided that the scope of the essence of this application is not changed.

The processor 180 is a control center of the mobile phone, connects various parts of the entire mobile phone through various interfaces and lines, and executes various functions of the mobile phone and processes data by running or executing a software program and/or a module stored in the memory 120 and invoking data stored in the memory 120, to perform overall monitoring on the mobile phone. Optionally, the processor 180 may include one or more processing units. Preferably, an application processor and a modem processor may be integrated into the processor 180. The application processor mainly handles an operating system, a user interface, an application program, and the like. The modem processor mainly handles radio communication. It may be understood that the modem processor may not be integrated into the processor 180.

The mobile phone 100 further includes the power supply 190 (such as a battery) that supplies power to each component. Preferably, the power supply may be logically connected to the processor 180 by using a power supply management system, thereby implementing functions such as charging management, discharging management, and power consumption management by using the power supply management system.

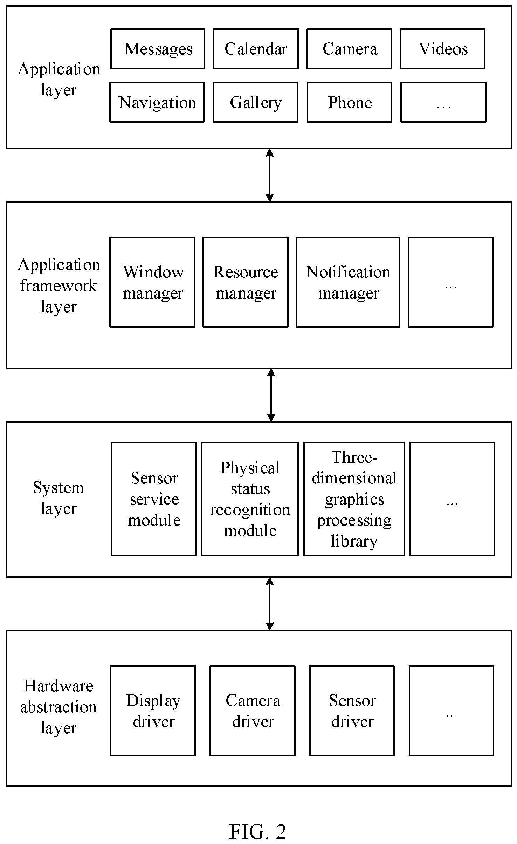

FIG. 2 is a schematic diagram of a software structure of a mobile phone 100 according to an embodiment of this application. For example, the operating system of the mobile phone 100 is an Android system. In some embodiments, the Android system is divided into four layers: an application layer, an application framework layer (framework, FWK), a system layer, and a hardware abstraction layer. The layers communicate with each other through a software interface.

As shown in FIG. 2, the application layer may include a series of application packages, and the application packages may include applications such as "messages", "calendar", "camera", "videos", "navigation", "gallery", and "calls". Particularly, a speech recognition algorithm may be embedded into an application program, a speech recognition process is started by using a related control in the application program, and a collected target speech signal is processed, to obtain corresponding text information.

The application framework layer provides an application programming interface (application programming interface, API) and a programming framework for an application at the application layer. The application framework layer may include some predefined functions, such as a function for receiving an event sent by the application framework layer.

As shown in FIG. 2, the application framework layer may include a window manager, a resource manager, a notification manager, and the like.

The window manager is configured to manage a window program. The window manager may obtain a size of a display, determine whether there is a status bar, lock a screen, take a screenshot, and the like. A content provider is configured to: store and obtain data, and enable the data to be accessed by an application. The data may include a video, an image, audio, calls that are made and received, a browsing history and a bookmark, a phone book, and the like.

The resource manager provides various resources for an application, such as a localized character string, an icon, a picture, a layout file, and a video file.

The notification manager enables an application to display notification information in a status bar, and may be configured to convey a notification message. The notification manager may automatically disappear after a short pause without user interaction. For example, the notification manager is configured to provide notifications of download completing, a message prompt, and the like. The notification manager may alternatively be a notification that appears in a top status bar of the system in a form of a graph or a scroll bar text, for example, a notification of an application running on the background or a notification that appears on the screen in a form of a dialog window. For example, text information is prompted in the status bar, a prompt tone is produced, the electronic device vibrates, or an indicator light blinks.

The application framework layer may further include:

a view system, where the view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The system layer may include a plurality of functional modules, for example, a sensor service module, a physical status recognition module, and a three-dimensional graphics processing library (for example, OpenGL ES).

The sensor service module is configured to monitor sensor data uploaded by various types of sensors at a hardware layer, to determine a physical status of the mobile phone 100.

The physical status recognition module is configured to analyze and recognize a user gesture, a face, and the like.

The three-dimensional graphics processing library is configured to implement three-dimensional graphics drawing, image rendering, composition, layer processing, and the like.

The system layer may further include:

a surface manager, configured to: manage a display subsystem and provide fusion of 2D and 3D layers for a plurality of applications.

A media library supports playback and recording of a plurality of commonly used audio and video formats, static image files, and the like. The media library may support a plurality of audio and video coding formats such as MPEG4, H.264, MP3, AAC, AMR, JPG, and PNG.

The hardware abstraction layer is a layer between hardware and software. The hardware abstraction layer may include a display driver, a camera driver, a sensor driver, a microphone driver, and the like, and is configured to drive related hardware at the hardware layer, such as a display, a camera, a sensor, and a microphone. Particularly, a microphone module is started by using the microphone driver to collect target speech information of a user, to perform a subsequent speech recognition procedure.

It should be noted that the speech recognition method provided in the embodiments of this application may be performed at any one of the foregoing layers. This is not limited herein.

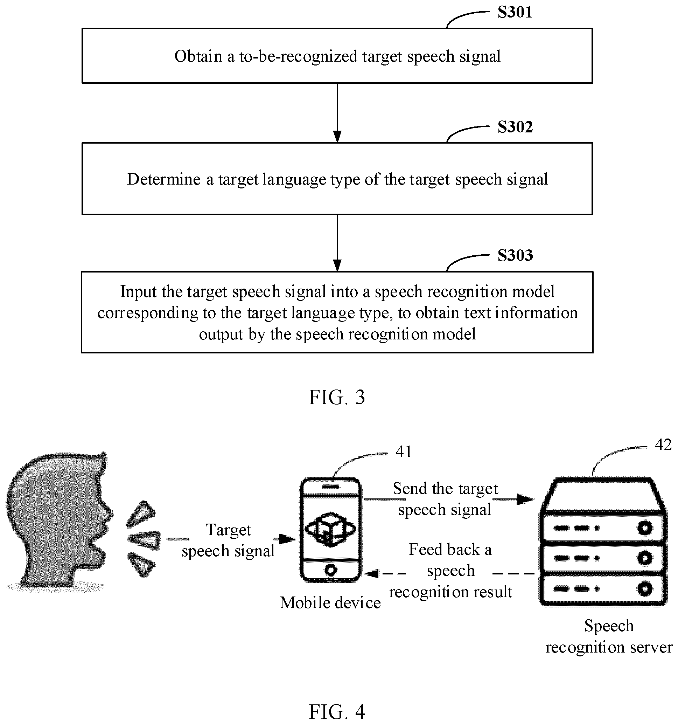

In the embodiments of this application, a procedure is executed by a device on which a speech recognition program is installed. As an example rather than a limitation, the device on which the speech recognition program is installed may be specifically a terminal device. The terminal device may be a smartphone, a tablet computer, a notebook computer, a server, or the like used by the user, and is configured to recognize an obtained speech signal, and determine text information corresponding to the speech signal, to convert a sound signal into text information. FIG. 3 is an implementation flowchart of a speech recognition method according to a first embodiment of this application. Details are as follows:

S301: Obtain a to-be-recognized target speech signal.

In this embodiment, a terminal device may collect the target speech signal of a user by using a built-in microphone module. In this case, the user may activate the microphone module by starting a specific application in the terminal device, for example, a recording application or a real-time speech conversation application. The user may alternatively tap some controls in a current application to activate the microphone module, for example, tap a control for sending a speech in a social application, and send the collected speech signal as interaction information to a communication peer end. In this case, the terminal device collects, by using the microphone module, a speech signal generated in a tapping operation process of the user, and uses the speech signal as the target speech signal. The terminal device has a built-in input method application. The input method application supports a speech input function. The user may tap an input control to activate the input method application in the terminal device, and select a speech input text function. In this case, the terminal device may start the microphone module, collect the target speech signal of the user by using the microphone module, convert the target speech signal into text information, and import the text information into the input control as a required input parameter. The terminal device may alternatively collect the target speech signal of the user by using an external microphone module. In this case, the terminal device may establish a communication connection to the external microphone module by using a wireless communications module, a serial interface, or the like. The user may tap a recording button on the microphone module to start the microphone module to collect the target speech signal, and the microphone module transmits the collected target speech signal to the terminal device by using the established communication connection. After receiving the target speech signal fed back by the microphone module, the terminal device may perform a subsequent speech recognition procedure.

In a possible implementation, in addition to obtaining, by using the microphone module, the to-be-recognized target speech signal, the terminal device may further obtain the target speech signal in a manner of sending by using the communication peer end. The terminal device may establish a communication connection to the communications peer end by using a communications module, and receive, by using the communications connection, the target speech signal sent by the communications peer end. For a manner in which the communications peer end collects the target speech signal, refer to the foregoing process. Details are not described herein again. After receiving the target speech signal fed back by the communication peer end, the terminal device may perform speech recognition on the target speech signal. The following describes the foregoing process by using an application scenario. A communication link for transmitting interaction data is established between a terminal device A and a terminal device B based on a social application, and the terminal device B collects a target speech signal by using a built-in microphone module, and sends the target speech signal to the terminal device A through the established communication link used to transmit the interaction data. The terminal device A may play the target speech signal by using a speaker module, and a user of the terminal device A may obtain interaction content in a listening manner. If the user of the terminal device A cannot listen to the target speech signal, the user of the terminal device A may tap a "text conversion" button to recognize text information corresponding to the target speech signal, and display the interaction content in a manner of outputting the text information.

In a possible implementation, after obtaining the target speech signal, the terminal device may preprocess the target speech signal by using a preset signal optimization algorithm, so that accuracy of subsequent speech recognition can be improved. An optimization manner includes but is not limited to one or a combination of the following: signal amplification, signal filtering, abnormality detection, signal repair, and the like.

The abnormality detection is specifically: extracting a plurality of waveform feature parameters based on a signal waveform of the collected target speech signal, such as a signal-to-noise ratio, a duration proportion of valid speech, and duration of the valid speech, and obtain signal quality of the target speech signal through calculation based on the collected waveform feature value. If it is detected that the signal quality is less than a valid signal threshold, the target speech signal is recognized as an invalid signal, and a subsequent speech recognition operation is not performed on the invalid signal. On the contrary, if the signal quality is higher than the valid signal threshold, the target speech signal is recognized as a valid signal, and operations of S302 and S303 are performed.

The signal repair is specifically: performing, by using a preset waveform fitting algorithm, waveform fitting on an interruption area in a process of collecting a target speech signal, to generate a continuous target speech signal. The waveform fitting algorithm may be a neural network, and a parameter in the waveform fitting algorithm is adjusted by collecting a historical speech signal of a target user, so that a waveform trend of the fitted target speech signal matches a waveform trend of the target user, to improve a waveform fitting effect. Preferably, the signal repair operation is performed after the abnormality detection operation because when a missing waveform of the target speech signal is modified by using a signal, collection quality of the target speech signal is improved, the abnormality detection operation is affected, and an abnormal signal whose collection quality is poor cannot be recognized. Therefore, the terminal device may first determine, by using an abnormality detection algorithm, whether the target speech signal is a valid signal. If the target speech signal is the valid signal, the signal repair is performed on an electrocardiogram signal by using a signal repair algorithm. On the contrary, if the target speech signal is an abnormal signal, the signal repair does not need to be performed. In this way, an unnecessary repair operation is reduced.

In a possible implementation, the terminal device may extract a valid speech segment from the target speech signal by using a voice activity detection algorithm. The valid speech segment specifically refers to a speech segment including speech content, and an invalid speech segment specifically refers to a speech segment that does not include speech content. The terminal device may set a speech start amplitude and a speech end amplitude, and a value of the speech start amplitude is greater than a value of the speech end amplitude. In other words, a start requirement of the valid speech segment is higher than an end requirement of the valid speech segment. Because the user usually has a relatively high volume pitch at a start time of speech, in this case, a value of a corresponding speech amplitude is relatively high. However, in a speech process of the user, some characters have weak or soft tones. In this case, it should not be recognized that the speech of the user is interrupted. Therefore, the speech end amplitude needs to be appropriately reduced to avoid misrecognition. The terminal device may perform valid speech recognition on a speech waveform diagram based on the speech start amplitude and the speech end amplitude, to obtain a plurality of valid speech segments through division. An amplitude corresponding to a start moment of the valid speech segment is greater than or equal to the speech start amplitude, and an amplitude corresponding to an end moment of the valid speech segment is less than or equal to the speech end amplitude. In a subsequent recognition process, the terminal device may perform speech recognition on the valid speech segment, and the invalid speech segment does not need to be recognized, so that a signal length of speech recognition can be reduced, thereby improving recognition efficiency.

In a possible implementation, the target speech signal may be specifically an audio stream, the audio stream includes a plurality of speech frames, and a sampling rate of the audio stream is specifically 16 kHz, that is, 16k speech signal points are collected per second. In addition, each signal point is represented by using 16 bits, that is, a bit depth is 16 bits. A frame length of each speech frame is 25 ms, and an interval between each speech frame is 10 ms.

S302: Determine a target language type of the target speech signal.

In this embodiment, after obtaining the target speech signal, the terminal device may determine, by using a preset language recognition algorithm, the target language type corresponding to the target speech signal. The target speech signal may be speech signals based on different language types, and different language types correspond to different speech recognition algorithms. Therefore, before speech recognition is performed, a target speech type corresponding to the target speech signal needs to be determined. The target language type may be classified based on a language type, for example, Chinese, English, Russian, German, French, and Japanese, or may be classified based on a regional dialect type. For Chinese, the target language type may be classified into Mandarin, Cantonese, Shanghai dialect, Sichuan dialect, and the like. For Japanese, the target language type may be classified into Kansai accent, standard Japanese, and the like.

In a possible implementation, the terminal device may receive a region range entered by the user, for example, an Asian range, a Chinese range, or a Guangdong range, and the terminal device may determine, based on the region range entered by the user, language types included in a region, and adjust the language recognition algorithm based on all language types in the region. As an example rather than a limitation, the region range is the Guangdong range, and language types included in the Guangdong range are Cantonese, a Chaoshan dialect, Hakka, and Mandarin. In this case, a corresponding language recognition algorithm is configured based on the four language types. The terminal device may further obtain, by using a built-in positioning apparatus, position information used when the terminal device collects the target speech signal, and determine a region range based on the position information, so that the user does not need to perform manually entering, thereby improving an automation degree. The terminal device may filter, based on the foregoing region range, a language type with a relatively low recognition probability, so that accuracy of the language recognition algorithm can be improved.

In a possible implementation, the terminal device may be specifically a speech recognition server. The speech recognition server may receive a target speech signal sent by each user terminal, determine a target language type of the target speech signal by using a built-in language recognition algorithm, extract, from a database, a real-time speech recognition model corresponding to the target language type to recognize text information corresponding to the target speech signal, and feed back the text information to the user terminal.

As an example rather than a limitation, FIG. 4 is a schematic structural diagram of a speech recognition system according to an embodiment of this application. Referring to FIG. 4, the speech recognition system includes a user terminal 41 and a speech recognition server 42. The user may collect, by using the user terminal 41, a target speech signal that needs to be recognized. A terminal device 41 may be installed with a client program corresponding to the speech recognition server 42, establish a communication connection to the speech recognition server 42 by using the client program, and send the collected target speech signal to the speech recognition server 42 by using the client program. Because the speech recognition server 42 uses a real-time speech recognition model, the speech recognition server 42 can respond to a speech recognition request of the user in real time, and feed back a speech recognition result to the user terminal 41 by using the client program. After receiving the speech recognition result, the user terminal 41 may output text information in the speech recognition result to the user by using an interaction module such as a display or a touchscreen, to complete a speech recognition procedure.

In a possible implementation, the terminal device may invoke an application programming interface API provided by the speech recognition server, send a target speech signal that needs to be recognized to the speech recognition server, determine a target language type of the target speech signal by using the built-in language recognition algorithm of the speech recognition server, select a speech recognition algorithm corresponding to the target language type, output text information of the target speech signal, and feed back the text information to the terminal device through the API interface.

S303: Input the target speech signal into a speech recognition model corresponding to the target language type, to obtain text information output by the speech recognition model.

The speech recognition model is obtained by training a training sample set, where the training sample set includes a plurality of extended speech signals, extended text information corresponding to each extended speech signal, an original speech signal corresponding to each extended speech signal, and original text information corresponding to each original speech signal, and the extended speech signal is obtained by converting an existing text of a basic language type.

In this embodiment, after determining the target language type corresponding to the target speech signal, the terminal device may obtain a real-time speech recognition model corresponding to the target language type. A built-in memory of the terminal device may store real-time speech recognition models of different language types. The terminal device may select the corresponding real-time speech recognition model from the memory based on a type number of the target language type. The terminal device may further send a model obtaining request to a cloud server, where the model obtaining request carries the type number of the recognized target language type, and the cloud server may feed back the real-time speech recognition model corresponding to the type number to the terminal device.

In this embodiment, a quantity of samples of different language types is different, especially for the basic language type. For Chinese, the basic language type is Mandarin. Because a quantity of used users and use occasions of Mandarin is relatively large, a quantity of speech samples that can be collected is relatively large. When the real-time speech recognition model is trained, because the quantity of samples is large, a training effect is good. Therefore, output accuracy of the real-time speech recognition model of the basic language type is relatively high. For a non-basic language type such as a regional dialect, for Chinese, the regional dialect is other languages different from Mandarin, such as Cantonese, a Chaoshan dialect, a Shanghai dialect, a Beijing dialect, and a Tianjin dialect. Because a quantity of used users of the regional dialect is relatively small and a usage scenario is relatively limited, a quantity of collected samples of a speech signal of the regional dialect is relatively small. Therefore training coverage is relatively low, and output accuracy of a real-time speech recognition model of the non-basic language type is reduced. To balance differences between sample quantities of different language types, and improve recognition accuracy of the real-time speech recognition model of the non-basic language type, in this embodiment of this application, the training set used when the real-time speech recognition model is trained further includes the extended speech signal in addition to the original speech signal. The original speech signal indicates that a language type used by a speaking object corresponding to the signal is the target language type, that is, a speech signal that is said based on the target language type. The extended speech signal is not an original signal that is actually collected, but is a synthesized speech signal output by importing a basic language text corresponding to the basic language type into a preset speech synthesis algorithm. Because a quantity of basic language texts edited by using the basic language type is relatively large, a quantity of samples is relatively large, and training coverage can be improved. For example, most Chinese books, notices, and online articles are written based on Mandarin as a reading language, while a quantity of texts in a regional dialect such as Cantonese or a northeast dialect as the reading language is relatively small. Therefore, the extended speech signal is converted based on the basic language text corresponding to the basic language type, to increase a quantity of samples of the non-basic language type.

In a possible implementation, a manner of obtaining the original speech signal may be as follows: The terminal device may download a corpus of the target language type from a plurality of preset cloud servers, where the corpus stores a plurality of historical speech signals about the target language type. The terminal device collates all historical speech signals, and uses the collated historical speech signals as original speech signals in the training set. The historical speech signals may be obtained by taking a screenshot from audio data of a video file. For example, a tag of a movie file includes a voice dubbing language, and if the voice dubbing language matches the target language type, audio data in the movie file is obtained by recording based on a speech signal of the target language type. Therefore, the original speech signal may be obtained from the audio data in the movie file. Certainly, if another existing file carries a tag of the target language type, the original speech signal may alternatively be extracted from the existing file.

In a possible implementation, a manner of generating the extended speech signal may be: The terminal device may perform, by using a semantic recognition algorithm, semantic analysis on an existing text of the basic language type, determine text keywords included in the existing text, determine a keyword translation term corresponding to each text keyword in the target language type, obtain a translation term pronunciation corresponding to each keyword translation term, and generate the extended text based on translation term pronunciations of all keyword translation terms.

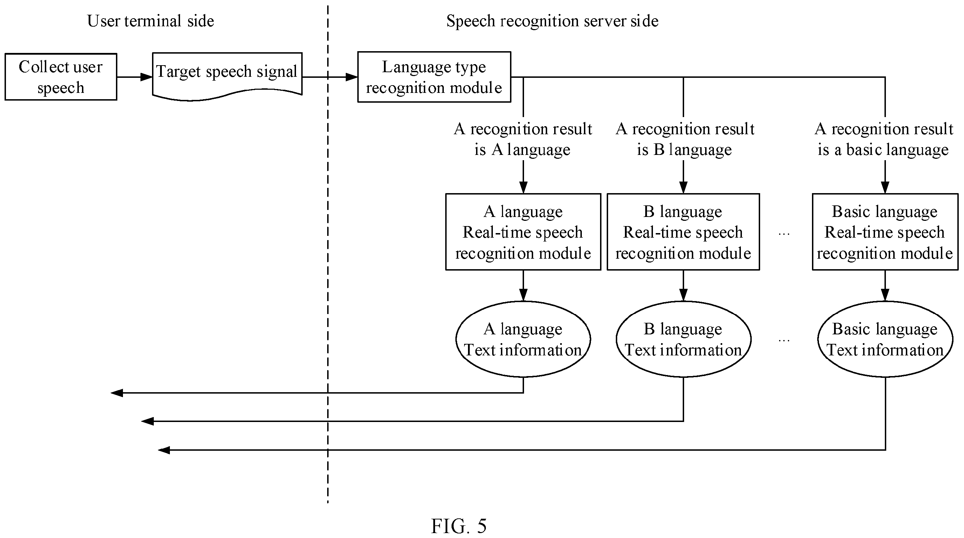

As an example rather than a limitation, FIG. 5 is an interaction flowchart of a speech recognition system according to an embodiment of this application. Referring to FIG. 5, the speech recognition system includes a user terminal and a speech recognition server. The speech recognition server includes a plurality of different modules: a language type recognition module and real-time speech recognition modules corresponding to different language types, where the real-time speech recognition modules include a real-time speech recognition module of a basic language type and a real-time speech recognition module of a regional dialect. After collecting a target speech signal of a user, the user terminal sends the target speech signal to the speech recognition server, determines a target language type of the target speech signal by using the language type recognition module in the speech recognition server, transmits the target language type of the target speech signal to a corresponding real-time speech recognition module for speech recognition, to output corresponding text information, and feeds back the output text information to the user terminal.

In this embodiment, a terminal device may train a native speech recognition model by using an original speech signal and an extended speech signal obtained by converting an existing text of a basic language type. When a recognition result of the native speech recognition model converges and a corresponding loss function is less than a preset loss threshold, it is recognized that adjustment of the native speech recognition model is completed. In this case, the adjusted native speech recognition model may be used as the foregoing real-time speech recognition model, to respond to an initiated speech recognition operation.

With popularization of intelligent mobile devices, a speech recognition (Automatic Speech Recognition, ASR) technology, as a new man-machine interaction manner, begins to be widely applied. In a large quantity of application scenarios, a plurality of services may be provided based on the speech recognition technology, for example, an intelligent speech assistant, a speech input method, and a text conversion system. In recent years, development of deep learning greatly improves recognition accuracy of the ASR technology. Currently, most ASR systems can be built based on deep learning models. However, the deep learning models need to rely on a large amount of data, namely, a training corpus, to improve the recognition accuracy. A source of the training corpus is manual marking. However, manual costs are very high, which hinders development of the ASR technology. In addition to an active marking mode, a large amount of user data can be collected during use of an ASR model. If the data can be marked in an automatic manner, a quantity of training corpora can be greatly expanded, thereby improving accuracy of speech recognition. When facing a large quantity of users, because different users use different language types, the ASR model is required to adapt to different language types through self-learning, to achieve high recognition accuracy for all language types. However, because of a small quantity of user samples of regional dialects, training corpora of some dialects is insufficient, which affects a recognition rate of this kind of dialects. However, in an existing real-time speech recognition models, a quantity of samples of various dialects is seriously unbalanced, and a quantity of samples of basic languages accounts for the majority, while some dialect samples are scarce, so it is difficult to improve the recognition rate of dialects. In the field of real-time speech recognition, although an amount of user data is large, it is impossible to mark all the data manually, and errors may be introduced through machine automatic marking. These errors may cause the model to deviate during a self-learning process, and reduces model performance.

In a possible implementation, different real-time speech recognition models are configured based on region information collected by a speech signal, so that the real-time speech recognition models can be trained according to an administrative region division rule such as a province or an urban area, to implement targeted model training. However, in the foregoing manner, accents cannot be refinedly modeled based on province-specific accents. Because dialects in some provinces differ greatly, dialects in a same province have completely different pronunciation manners or even phrases, accent consistency in the same province cannot be ensured. As a result, a granularity of real-time speech training is relatively large, and recognition accuracy is reduced. In addition, some dialects are used by a large number of people, such as Cantonese and Shanghai dialect, and the foregoing people may be distributed in a plurality of different provinces. As a result, specific dialects cannot be optimized, and recognition accuracy is reduced.

Different from the foregoing implementation, in the manner provided in this embodiment, the existing text of the basic language type may be converted into the extended speech signal of the target language type by using characteristics of a large quantity of samples of the basic language type and high coverage. Because the foregoing conversion manner is directional conversion, the generated extended speech signal is necessarily a speech signal based on the target language type, so that the user does not need to manually marking, which reduces labor costs, and can also provide a large quantity of training corpora for regional dialects, thereby implementing sample balance of different language types, and improving accuracy of a training operation.

It can be learned from the foregoing that, in the speech recognition method provided in this embodiment of this application, a basic language text with a relatively large quantity of samples is converted into an extended speech signal, and a real-time speech recognition model corresponding to a target language type is trained by using an original speech signal and an extended speech signal that correspond to the target language type. In addition, speech recognition is performed on a target speech signal by using the trained real-time speech recognition model, to output text information. In this way, a quantity of samples required for training a real-time speech recognition model of a non-basic language can be increased, to improve accuracy and applicability of speech recognition.

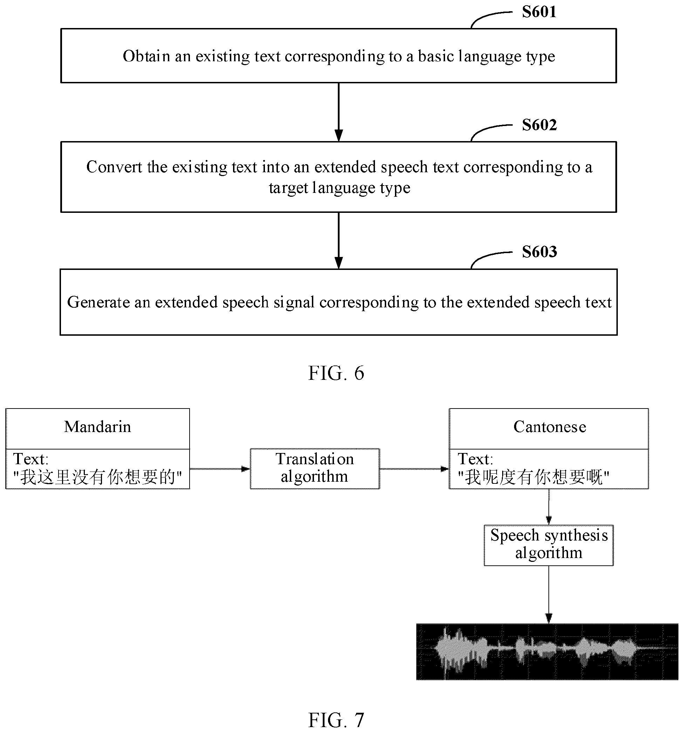

FIG. 6 is a specific implementation flowchart of a speech recognition method according to a second embodiment of this application. Referring to FIG. 6, compared with the embodiment shown in FIG. 3, in the speech recognition method provided in this embodiment, before the inputting the target speech signal into a speech recognition model corresponding to the target language type, to obtain text information output by the speech recognition model, the method further includes: S601 to S603, which are specifically described as follows:

Further, before the inputting the target speech signal into a speech recognition model corresponding to the target language type, to obtain text information output by the speech recognition model, the method further includes: S601: Obtain an existing text corresponding to the basic language type.

In this embodiment, because the basic language type has a wide use range and a large quantity of users, a large quantity of texts of the basic language type are used as a recording language and stored in an internet and a cloud database. A terminal device may extract the existing text of the basic language type from a text library of the cloud database, and may further perform data crawling from the internet to obtain texts of the basic language type used by a plurality of recording languages, to obtain the existing text.

In a possible implementation, when responding to a speech recognition operation initiated by a user, the terminal device obtains a historical speech signal sent by the user. If it is detected that a language type corresponding to the historical speech signal is the basic language type, the terminal device may use a historical text generated by using the historical speech signal as the existing text recorded based on the basic language type, to implement self-collecting training data. In this way, a quantity of training samples is increased, and recognition accuracy of a real-time speech recognition model is further improved.

In a possible implementation, different target language types correspond to different basic language types, and the terminal device may establish a basic language correspondence to determine basic language types associated with different target language types. It should be noted that one target language type corresponds to one basic language type, and one basic language type may correspond to a plurality of target language types. For example, a basic language type of Chinese is Mandarin, and a basic language type corresponding to all language types of Chinese is Mandarin; and a basic language type of English is British English, and a basic language type corresponding to all language types of English is British English. In this way, a correspondence between different language types and the basic language types can be determined. The terminal device may determine, based on the established basic language correspondence, a basic language type corresponding to the target language type, and obtain an existing text of the basic language type.

S602: Convert the existing text into an extended speech text corresponding to the target language type.

In this embodiment, the terminal device may determine a translation algorithm between the basic language type and the target language type, and import the existing text into the translation algorithm, to generate the extended speech text. Because the existing text is recorded based on the basic language type, words and syntax in the existing text are determined based on the basic language type, and words and syntax used by different language types are different. In order to improve accuracy of a subsequent extended speech signal, the terminal device does not directly generate corresponding synthesized speech based on the existing text, but first translates the existing text, to generate an extended speech text that meets a grammatical structure and a word specification of the target language type, so as to improve accuracy of subsequent recognition.

In a possible implementation, after obtaining the extended speech text through conversion, the terminal device may check correctness of the translation. The terminal device may determine, by using a semantic analysis algorithm, each entity included in the existing text, and obtain a translation term corresponding to each entity in the target language type, detect whether each translation term is in the converted extended speech text, recognize a mutual positional relationship between each translation term if each translation term is in the extended speech text, and determine whether the translation term meets the grammatical structure of the target language type based on the mutual positional relationship. If the mutual positional relationship meets the grammatical structure, it is recognized that the translation is correct. On the contrary, if the mutual positional relationship does not meet the grammatical structure and/or the translation term is not included in the extended speech text, it is recognized that translation fails, and the translation algorithm needs to be readjusted.

S603: Generate the extended speech signal corresponding to the extended speech text.

In this embodiment, the terminal device may obtain, by using a speech synthesis algorithm, a standard pronunciation corresponding to each character in the extended speech text, and determine, by using a semantic recognition algorithm, phrases included in the extended speech text, determine an inter-phrase interval duration between each phrase and an inter-character interval duration between different characters in the phrase, and generate, based on the inter-phrase interval duration, the inter-character interval duration, and the standard pronunciation corresponding to each character, the extended speech signal corresponding to the extended speech text, to generate the extended speech signal with the target language type as a session language.

In a possible implementation, the terminal device may establish corresponding corpora for different target language types. Each corpus records a plurality of basic pronunciations of the target language type. After obtaining a character corresponding to the target language type, the terminal device may determine a basic pronunciation included in the character, and combine and transform the plurality of basic pronunciations to obtain a standard pronunciation corresponding to the character, to generate the extended speech signal based on the standard pronunciation corresponding to each character.

As an example rather than a limitation, FIG. 7 is a schematic diagram of conversion of an extended speech text according to an embodiment of this application. An existing text obtained by a terminal device is "我这里没有你想要的", a corresponding basic language type of the existing text is Mandarin, and a target language type is Cantonese. In this case, the terminal device may translate the existing text into an extended speech text based on Cantonese by using a translation algorithm between Mandarin and Cantonese, to obtain a translation result "我呢度有你想要嘅", and import the extended speech text into a speech synthesis algorithm of Cantonese, to obtain a corresponding extended speech signal for meaning of "我这里没有你想要的", to implement sample expansion.

In this embodiment of this application, the existing text corresponding to the basic language type is obtained, and the existing text is converted to obtain the extended speech text, so that sample extension of a non-basic language with a small quantity of samples can be implemented, a training effect of a real-time speech recognition model is improved, and recognition accuracy is improved.

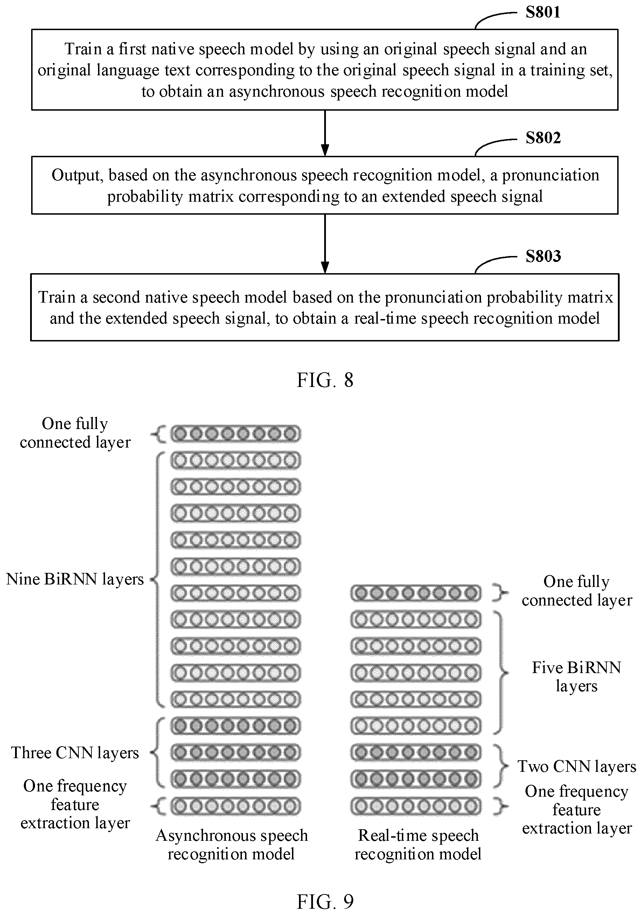

FIG. 8 is a specific implementation flowchart of a speech recognition method according to a third embodiment of this application. Referring to FIG. 8, compared with the embodiment shown in FIG. 3, in the speech recognition method provided in this embodiment, before the inputting the target speech signal into a speech recognition model corresponding to the target language type, to obtain text information output by the speech recognition model, the method further includes S801 to S803, which are specifically described as follows:

Further, before the inputting the target speech signal into a speech recognition model corresponding to the target language type, to obtain text information output by the speech recognition model, the method further includes:

S801: Train a first native speech model by using the original speech signal and an original language text corresponding to the original speech signal in a training set, to obtain an asynchronous speech recognition model.

In this embodiment, a terminal device may be configured with two different speech recognition models: a real-time speech recognition model that can respond to a real-time speech recognition operation and the asynchronous speech recognition model that requires a relatively long response time. The real-time speech recognition model may be established based on a neural network. The neural network for establishing the real-time speech recognition model has a relatively small quantity of network layers, and therefore response efficiency is relatively fast, but at the same time, recognition accuracy is lower than that of the asynchronous speech recognition model. The asynchronous speech recognition model may also be established based on the neural network. The neural network for establishing the asynchronous speech recognition model has a relatively large quantity of network layers, and therefore, recognition duration is relatively long, and response efficiency is relatively low, but at the same time, recognition accuracy is higher than that of the real-time speech recognition model. In this case, the asynchronous speech recognition model is used to correct data deviations in a training process of the real-time speech recognition model, thereby improving accuracy of the real-time speech recognition model.

In a possible implementation, the real-time speech recognition model and the asynchronous speech recognition model may be established based on neural networks of a same structure, or may be established based on neural networks of different types of structures. This is not limited herein. Therefore, a second native speech model used to construct the real-time speech recognition model and the first native speech model used to construct the asynchronous speech recognition model may be established based on neural networks of a same structure, or may be established based on neural networks of different types of structures. This is not limited herein.

In this embodiment, because the asynchronous speech recognition model has better recognition accuracy and longer convergence duration, a data training effect can also be ensured when a small quantity of samples are available. The original speech signal is a speech signal obtained without conversion, and a pronunciation of each byte in the original speech signal varies based on different users. Therefore, the original speech signal has relatively high coverage for a test process, and because pronunciations of the users deviate from a standard pronunciation, a subsequent training process can also be recognized and corrected. Based on the foregoing reason, the terminal device may use the original speech signal and the original language text corresponding to the original speech signal as training samples, train the first native speech model, use a corresponding network parameter when a training result converges and a loss amount of the model is less than a preset loss threshold as a trained network parameter, and configure the first native speech model based on the trained network parameter, to obtain the asynchronous speech recognition model. A function used for calculating the loss amount of the first native speech model may be a connectionist temporal classification loss (Connectionist Temporal Classification Loss, CTC Loss) function, and the CTC Loss may be specifically expressed as:

$$Loss_{ctc} = -\sum_{(x,z) \in S} \ln p(z|x) ,$$

where

$Loss_{ctc}$ is the foregoing loss function; $X$ is the original speech signal; $Z$ is the original language text corresponding to the original speech signal; $S$ is a training set constituted by all original speech signals; and $p(z|x)$ is a probability value of outputting the original language text based on the original speech signal.

Further, in another embodiment of this application, there are more first network layers in the asynchronous speech recognition model than second network layers in the real-time speech recognition model.

In this embodiment, the foregoing two speech recognition models are specifically speech recognition models established based on neural networks of the same structure, and the asynchronous speech recognition model includes more first network layers than second network layers of the real-time speech recognition model, so that the asynchronous speech recognition model has better recognition accuracy, but the duration of the speech recognition operation is relatively long. Therefore, the asynchronous speech recognition model is applicable to a non-real-time asynchronous response scenario. For example, different users may send, to the terminal device, an audio file on which speech recognition needs to be performed, and the terminal device may import the audio file into the asynchronous speech recognition model. In this case, a user terminal and the terminal device may configure a communication link as a persistent connection link, and detect a running status of the asynchronous speech recognition model at a preset time interval. In a persistent connection process, overheads for maintaining the communication link between the user terminal and the terminal device are relatively low, thereby reducing resource occupation of an interface of the terminal device. If it is detected that the asynchronous speech recognition model may send a speech recognition result to the user terminal through the persistent connection link after outputting the speech recognition result of the audio file, network resource occupation of the persistent connection may be dynamically adjusted, thereby improving a sending speed of the speech recognition result. In this case, the asynchronous speech recognition model may add each speech recognition task to a preset task list, perform processing based on an adding order of each speech recognition task, and send each speech recognition result to each user terminal. The real-time speech recognition model may respond in real time to a speech recognition request sent by the user. In this case, a real-time transmission link may be established between the user terminal and the terminal device. In a process of collecting a speech signal, the user terminal transmits, in real time, an audio stream corresponding to the speech signal to the terminal device. The terminal device imports the audio stream into the real-time speech recognition model, that is, while the user terminal collects the speech signal of the user, the real-time speech recognition model may perform speech recognition on the audio frame that has been fed back in the speech signal. After the speech signal of the user is collected, the user terminal may send a complete audio stream to the terminal device, and the terminal device transmits a subsequently received and unrecognized remaining audio frame to the real-time speech recognition model, to generate a speech recognition result, that is, text information, and feeds back the speech recognition result to the user terminal. This implements a real-time response to the speech recognition request initiated by the user.

As an example rather than a limitation, FIG. 9 is a schematic structural diagram of an asynchronous speech recognition model and a real-time speech recognition model according to an embodiment of this application. Referring to FIG. 9, the real-time speech recognition model and the asynchronous speech recognition model belong to neural networks of a same network structure, and include a frequency feature extraction layer, a convolutional layer CNN, a cyclic neural network layer Bi-RNN, and a fully connected layer. The real-time speech recognition model and the asynchronous speech recognition model have a same quantity of layers of the frequency feature extraction layer and the fully connected layer, and both are one layer. The frequency feature extraction layer may extract a spectrum feature value from a speech spectrum obtained by converting the audio stream, to obtain a frequency feature matrix. The fully connected layer may determine a plurality of pronunciation probabilities of each audio frame based on eigenvectors finally output by the foregoing input layers, generate a pronunciation probability matrix, and output, based on the pronunciation probability matrix, text information corresponding to the speech signal. The real-time speech recognition model includes two convolutional layers and four cyclic neural network layers. The asynchronous speech recognition model includes three convolution layers and nine cyclic neural network layers. A plurality of convolutional layers and circular neural network layers have a better feature extraction feature, thereby improving recognition accuracy. However, a larger quantity of network layers indicate longer operation duration. Therefore, the real-time speech recognition model needs to balance recognition accuracy and response duration, and a quantity of configured network layers is less than that of the asynchronous speech recognition model.

In this embodiment of this application, more network layers are configured in the asynchronous speech recognition model, so that recognition accuracy of the asynchronous speech recognition model can be improved, and a subsequent training process of the real-time speech recognition model can be monitored and corrected, thereby improving recognition accuracy of the real-time speech recognition model.

S802: Output, based on the asynchronous speech recognition model, a pronunciation probability matrix corresponding to the extended speech signal.

In this embodiment, after configuring the asynchronous speech recognition model, the terminal device may import each extended speech signal into the asynchronous speech recognition model, to generate a pronunciation probability matrix corresponding to each extended speech signal. Because the extended speech signal specifically includes different speech frames, and different speech frames correspond to one pronunciation, and because a fully connected layer at the end of the speech recognition model is used to output probability values of different pronunciations, each speech frame may correspond to a plurality of different candidate pronunciations. Different candidate pronunciations correspond to different probability values, and then corresponding text information may be finally generated based on a previous context correlation degree of a character corresponding to each pronunciation and a probability value of each character. Based on this, different speech frames may correspond to a plurality of different pronunciations, and different pronunciations correspond to different probability values. A candidate speech corresponding to each speech frame is integrated, and the pronunciation probability matrix may be generated.

As an example rather than a limitation, Table 1 shows a schematic diagram of a pronunciation probability matrix according to an embodiment of this application. As shown in Table 1, the extended speech signal includes four speech frames: T1 to T4, and each speech frame may be used to represent one character. After recognition by the asynchronous speech recognition model, the first speech frame T1 corresponds to four different candidate pronunciations: "xiao", "xing", "liao", and "liang", and probability values corresponding to the pronunciations are 61%, 15%, 21%, and 3%. By analogy, each subsequent speech frame also has a plurality of candidate characters, and different candidate characters correspond to one pronunciation probability.

**Table 1**

| T1 | T2 | T3 | T4 |
|---|---|---|---|
| Xiao 61% | Ye 11% | Liao 22% | Yi 70% |
| Xing 15% | Yi 54% | Xing 19% | Ye 9% |
| Liao 21% | Yan 8% | Xiao 49% | Ya 21% |

(continued)

| T1 | T2 | T3 | T4 |
|---|---|---|---|
| Liang 3% | Ya 14% | Liang 10% | |
| | Yin 13% | | |

S803: Train a second native speech model based on the pronunciation probability matrix and the extended speech signal, to obtain the real-time speech recognition model.

In this embodiment, the terminal device may train the second native speech model in combination with the asynchronous speech recognition model and an existing training sample, to obtain the real-time speech recognition model, thereby improving recognition accuracy of the real-time speech recognition model. A specific function of the asynchronous speech recognition model is used to supervise, predict, and correct a training process of the second native speech model, to improve training efficiency and accuracy of the second native speech model, to obtain the real-time speech recognition model.

It should be noted that, in a process of training a model by configuring a training set, each input in the training set corresponds to only one standard output result, especially in a speech recognition process. Pronunciations of a same character vary greatly between different users or in different scenarios because of voice and tone of the users and noise in a collection process. Therefore, there may be a plurality of candidate pronunciations in an output result obtained through recognition. If only one standard output result is corresponding and training is performed based on the standard output result, whether a direction of speech prediction is accurate cannot be determined, thereby reducing training accuracy. To resolve the foregoing problem, the asynchronous speech recognition model is introduced in this application to correct a speech prediction direction of the real-time speech recognition model. The pronunciation probability matrix with a plurality of different candidate pronunciations is configured, and the real-time speech recognition model is trained based on the pronunciation probability matrix. Because the asynchronous speech recognition model has higher accuracy and reliability, it can be ensured that the speech prediction direction of the real-time speech recognition model is consistent with a speech recognition direction of the asynchronous speech recognition model, thereby improving accuracy of the real-time speech recognition model.

In a possible implementation, a process of training the second native speech model may be specifically: importing the extended speech signal into the second native speech model, generating a corresponding prediction pronunciation matrix, determining deviation values between difference candidate pronunciations and same candidate pronunciations by using the pronunciation probability matrix and the prediction pronunciation matrix, calculating deviation rates between the two matrices, determining a loss amount of the second native speech model based on all the deviation rates, and adjusting the second native speech model based on the loss amount. The calculation function of the loss amount may still be calculated by using the CTC Loss function. For a specific function formula, refer to the foregoing description. Details are not described herein again. In the function, $z$ is the pronunciation probability matrix, and $p(z|x)$ is a probability value of outputting the pronunciation probability matrix.

In this embodiment of this application, the asynchronous speech recognition model is trained, and the training process of the real-time speech recognition model is monitored based on the asynchronous speech recognition model, to improve a training effect, implement error correction of speech recognition, and improve accuracy of the real-time speech recognition model.

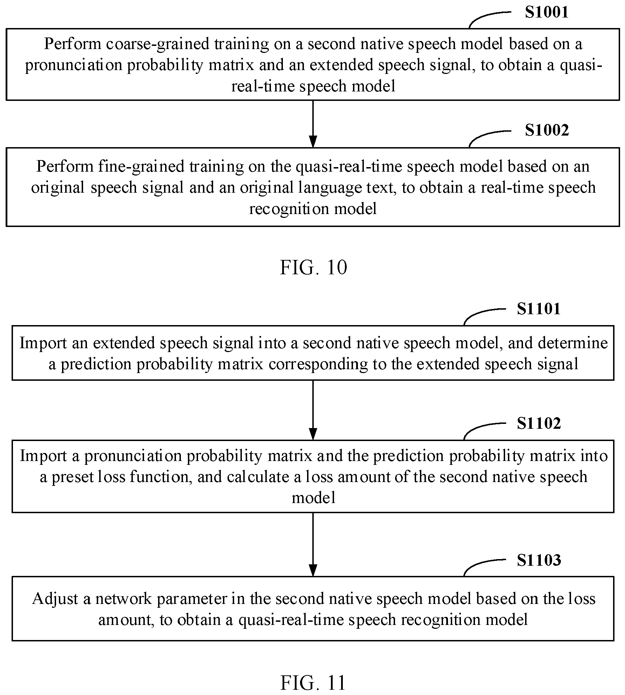

FIG. 10 is a specific implementation flowchart of S803 in a speech recognition method according to a fourth embodiment of this application. Referring to FIG. 10, compared with the embodiment shown in FIG. 8, S803 in the speech recognition method provided in this embodiment includes S1001 and S1002, which are specifically described as follows:

Further, the training a second native speech model based on the pronunciation probability matrix and the extended speech signal, to obtain the real-time speech recognition model includes:

S1001: Perform coarse-grained training on the second native speech model based on the pronunciation probability matrix and the extended speech signal, to obtain a quasi-real-time speech model.

In this embodiment, the training process of the second native speech model is divided into two parts: one is a coarse-grained training process, and the other is a fine-grained training process. In the coarse-grained training process, speech error correction and monitoring are specifically performed by using the pronunciation probability matrix generated by the asynchronous speech recognition model. In this case, the terminal device may use the extended speech signal as a training input of the second native speech model, use the pronunciation probability matrix as a training output of the second native speech model, and perform model training on the second native speech model until a result of the second native speech model converges. In addition, a corresponding loss function is less than a preset loss threshold. In this case, it is recognized that the training of the second native speech model is completed, and the trained second native speech model is recognized as the quasi-real-time speech model, to perform a next fine-grained training operation.

In a possible implementation, a process of performing the coarse-grained training on the second native speech model may be specifically: dividing the extended speech signal into a plurality of training groups, where the training groups include a specific quantity of extended speech signals and pronunciation probability matrices associated with the extended speech signals. The terminal device trains the second native speech model by using each training group, and after training, imports a preset original speech signal as a verification set into the second native speech model obtained after each training, to calculate a deviation rate of each verification set. The terminal device uses a network parameter of the second native speech model with a minimum deviation rate as a trained network parameter, and imports the trained network parameter into the second native speech model, to obtain the quasi-real-time speech model.

S1002: Perform fine-grained training on the quasi-real-time speech model based on the original speech signal and the original language text, to obtain the real-time speech recognition model.

In this embodiment, after generating the quasi-real-time speech recognition model, the terminal device may perform secondary training, that is, the fine-grained training. Training data used for the fine-grained training is the original speech signal and the original language text corresponding to the original speech signal. The original speech signal is a speech signal obtained without conversion, and a pronunciation of each byte in the original speech signal varies based on different users. Therefore, the original speech signal has relatively high coverage for a test process, and because pronunciations of the users deviate from a standard pronunciation, a subsequent training process can also be recognized and corrected. Based on the foregoing reason, the terminal device may use the original speech signal and the original language text corresponding to the original speech signal as training samples, train the quasi-real-time speech model, use a corresponding network parameter when a training result converges and a loss amount of the model is less than a preset loss threshold as a trained network parameter, and configure the quasi-real-time speech model based on the trained network parameter, to obtain the real-time speech recognition model. A function used for calculating the loss amount of the quasi-real-time speech model may be a connectionist temporal classification loss (Connectionist Temporal Classification Loss, CTC Loss) function, and the CTC Loss may be specifically expressed as:

$$Loss_{ctc} = -\sum_{(x,z) \in S} \ln p(z|x) \,,$$

where
$Loss_{ctc}$ is the foregoing loss function; $X$ is the original speech signal; $Z$ is the original language text corresponding to the original speech signal; $S$ is a training set constituted by all original speech signals; and $p(z|x)$ is a probability value of outputting the original language text based on the original speech signal.

In this embodiment of this application, the second native speech model is trained in two phases, to generate the real-time speech recognition model. A training sample is extended by extending speech information, and an error correction is performed in the training process by using the asynchronous speech recognition model, thereby improving training accuracy.

FIG. 11 is a specific implementation flowchart of S1001 in a speech recognition method according to a fifth embodiment of this application. Referring to FIG. 11, compared with the embodiment shown in FIG. 10, S1001 in the speech recognition method provided in this embodiment includes S1101 to S1103, which are specifically described as follows:

Further, the performing coarse-grained training on the second native speech model based on the pronunciation probability matrix and the extended speech text, to obtain a quasi-real-time speech model includes:

S1101: Import the extended speech signal into the second native speech model, and determine a prediction probability matrix corresponding to the extended speech signal.

In this embodiment, the terminal device may use the extended speech signal as a training input, and import the extended speech signal into the second native speech model. The second native speech model may determine a candidate pronunciation corresponding to each speech frame in the extended speech signal and a determining probability of each candidate pronunciation, and generate a prediction probability matrix by using candidate pronunciations corresponding to all speech frames and associated determining probabilities. A structure of the prediction probability matrix is consistent with a structure of the pronunciation probability matrix. For specific descriptions, refer to the description in the foregoing embodiment. Details are not described herein.

S1102: Import the pronunciation probability matrix and the prediction probability matrix into a preset loss function, and calculate a loss amount of the second native speech model.

In this embodiment, each extended speech signal corresponds to two probability matrices: the prediction probability matrix output based on the second native speech recognition model and the pronunciation probability matrix output based on the asynchronous speech recognition model. The terminal device may import two probability matrices corresponding to each extended speech signal into the preset loss function, to calculate a loss amount of the second native speech model. A higher degree of matching each candidate pronunciation in the prediction probability matrix and the corresponding probability value with the pronunciation probability matrix indicates a smaller value of a corresponding loss amount, so that recognition accuracy of the second native speech recognition model may be determined based on the loss amount.

Further, in another embodiment of this application, the loss function is specifically:

$$\begin{cases} Loss_{top\_k} = -\dfrac{1}{T}\sum_{t=1}^{T}\sum_{c=1}^{C}\widehat{y}_c^t \cdot \log(p_c^t) \\ \widehat{y}_c^t = \begin{cases} y_c^t \Rightarrow \arg\underset{c}{sort}(y_c^t) \le K \\ 0 \Rightarrow else \end{cases} \end{cases},$$

where

$Loss_{top\_k}$ is the loss amount; $p_c^t$ is a probability value that is of a $c^{th}$ pronunciation corresponding to a $t^{th}$ frame in the extended speech signal and that is in the prediction probability matrix; $\widehat{y}_c^t$ is a probability value that is of the $c^{th}$ pronunciation corresponding to the $t^{th}$ frame in the extended speech signal and that is in the pronunciation probability matrix processed by using an optimization algorithm; T is a total quantity of frames; C is a total quantity of pronunciations recognized in the $t^{th}$ frame; $y_c^t$ is a probability value that is of the $c^{th}$ pronunciation corresponding to the $t^{th}$ frame in the extended speech signal and that is in the pronunciation probability matrix; $\arg\underset{c}{sort}(y_c^t)$ is a sequence number corresponding to the $c^{th}$ pronunciation after all pronunciations that correspond to the $t^{th}$ frame in the extended speech signal and that are in the pronunciation probability matrix are sorted in descending order of probability values; and K is a preset parameter.

In this embodiment, the foregoing loss function is specifically used to train the second native speech model to learn first K pronunciations with relatively large probability values in the asynchronous speech recognition model. For pronunciations with relatively small probability values, learning does not need to be performed. Therefore, for the first K pronunciations with relatively large probability values, a corresponding probability value remains unchanged, that is, $y_2^1$. For other pronunciations except the first K pronunciations, an optimized probability value is 0, and corresponding learning efficiency is 0, so that speech recognition correction of the second native speech model can be implemented. In this way, a correction effect is improved, and correction efficiency can be considered, without learning other invalid pronunciation prediction behavior with low probability.

As an example rather than a limitation, Table 2 shows a pronunciation probability matrix processed by using an optimization algorithm according to this application. For the pronunciation probability matrix obtained before optimization, refer to Table 1. Pronunciations in the pronunciation probability matrix in Table 1 are not sorted according to probability values. If the value of K configured in the optimization algorithm is 2, the second native training model performs predictive learning on first two pronunciations with highest probability values. $y_1^1$ represents a probability value of a first pronunciation of a first frame, that is, a pronunciation probability of "xiao", which is 61%. Because the probability value is a largest value of all pronunciation probability values in the first frame, a corresponding sorting is 1, that is, a value of $\arg\underset{1}{sort}(y_1^1)$ is 1, which is less than or equal to K. Therefore, the pronunciation probability is learned, that is, $\widehat{y}_1^1$ is the same as $y_1^1$, which is 61%. $y_2^1$ represents a probability value of a second pronunciation of a second frame, that is, a pronunciation probability of "xing", which is 15%. Because the probability value is a third one after all the pronunciation probability values in the first frame are sorted in descending order, that is, a value of $\arg\underset{1}{sort}(y_3^1)$ is 3, which is greater than K. Therefore, the pronunciation probability is not learned, that is, $\widehat{y}_1^1$ is different from $y_1^1$, which is 0. The rest can be deduced in the same manner. In this way, the pronunciation probability matrix processed by using the optimization algorithm is obtained.

**Table 2**

| T1 | T2 | T3 | T4 |
|---|---|---|---|

| T1 | T2 | T3 | T4 |
|---|---|---|---|
| Xiao 61% | Ye 11% | Liao 22% | Yi 70% |
| Xing 15% | Yi 54% | Xing 19% | Ye 9% |
| Liao 21% | Yan 8% | Xiao 49% | Ya 21% |
| Liang 3% | Ya 14% | Liang 10% | |
| | Yin 13% | | |

In this embodiment of this application, the loss function is determined in a Top-K manner, so that pronunciation prediction with a relatively high probability can be learned. In this way, training accuracy is considered, and a convergence speed can be improved, thereby improving a training effect. In addition, the pronunciation probability matrix output by the asynchronous language recognition model can be compressed to reduce the storage space.

S1103: Adjust a network parameter in the second native speech model based on the loss amount, to obtain the quasi-real-time speech recognition model.

In this embodiment, the terminal device may adjust the second native speech model based on the loss amount, use a corresponding network parameter when the loss amount is less than a preset loss threshold and a result converges as a network parameter for which training is completed, and configure the second native speech model based on the trained network parameter, to obtain the quasi-real-time speech recognition model.

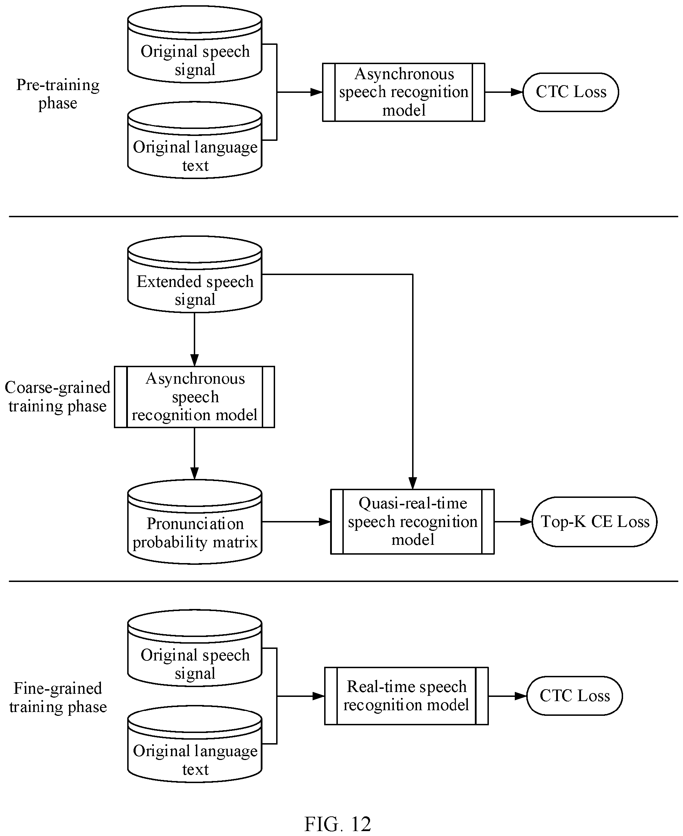

As an example rather than a limitation, FIG. 12 is a schematic diagram of a training process of a real-time speech model according to an embodiment of this application. Referring to FIG. 12, the training process includes three phases: a pre-training phase, a coarse-grained training phase, and a fine-grained training phase. In the pre-training phase, the asynchronous speech model is trained based on the original speech signal and the original language text. A loss function used in the training process may be the CTC Loss function. In the coarse-grained training phase, the pronunciation probability matrix of the extended speech signal may be output by using the trained asynchronous speech model, and the quasi-real-time speech model is trained based on the pronunciation probability matrix and the extended speech signal. A loss function used in the training process may be a Top-K CE Loss function. In the fine-grained training phase, the real-time speech model is trained based on the original speech signal and the original language text, and a loss function used in the training process may be the CTC Loss function.

In this embodiment of this application, a deviation value between the two probability matrices is calculated, to determine a recognition loss amount between the second native speech model and the asynchronous speech recognition model. In this way, error correction on the second native speech model based on the asynchronous semantic recognition model can be implemented, and training accuracy is improved.

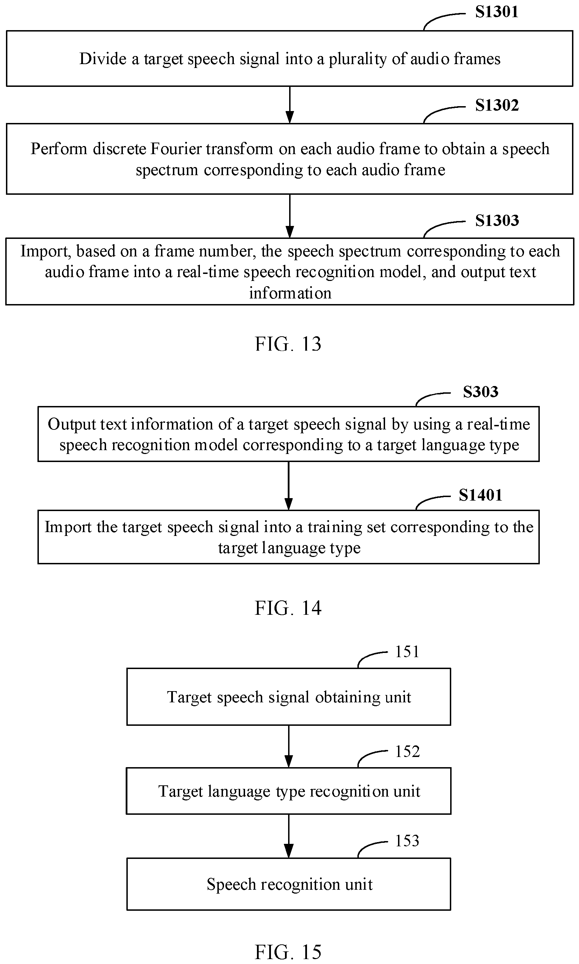

FIG. 13 is a specific implementation flowchart of S303 in a speech recognition method according to a sixth embodiment of this application. Referring to FIG. 13, compared with any one of the embodiments in FIG. 3, FIG. 6, FIG. 8, FIG. 10, and FIG. 11, S303 in the speech recognition method provided in this embodiment includes S1301 to S1303, which are specifically described as follows:

Further, the inputting the target speech signal into a speech recognition model corresponding to the target language type, to obtain text information output by the speech recognition model includes:

S1301: Divide the target speech signal into a plurality of audio frames.

In this embodiment, a speech signal may include a plurality of different audio frames, different audio frames have preset frame lengths, and there is a specific frame interval between the audio frames. The audio frames are arranged based on the frame interval, to obtain the foregoing complete audio stream. The terminal device may divide the target speech signal based on a preset frame interval and a preset frame length, to obtain the plurality of audio frames. Each audio frame may correspond to a pronunciation corresponding to one character.

S1302: Perform discrete Fourier transform on each audio frame to obtain a speech spectrum corresponding to each audio frame.

In this embodiment, the terminal device may implement conversion from time domain to frequency domain through discrete Fourier transform, to obtain a speech frequency band corresponding to each audio frame, and may determine a pronunciation frequency of each pronunciation based on the speech frequency band, to determine a character corresponding to each pronunciation based on the pronunciation frequency.

S1303: Import, based on a frame number, the speech spectrum corresponding to each audio frame into the real-time speech recognition model, and output the text information.

In this embodiment, the terminal device may import, based on the frame number associated with each audio frame in the target speech signal, the speech spectrum obtained by converting each audio frame into the real-time speech recognition model. The real-time speech recognition model may output a pronunciation probability corresponding to each audio frame, and generate the corresponding text information based on each candidate pronunciation probability and context correlation degree.

In this embodiment of this application, the target speech signal is preprocessed to obtain the speech spectrum of each audio frame in the target speech signal, so that data processing efficiency of the real-time speech recognition model can be improved, and recognition efficiency is improved.

FIG. 14 is a specific implementation flowchart of a speech recognition method according to a seventh embodiment of this application. Referring to FIG. 14, compared with any one of the embodiments in FIG. 3, FIG. 6, FIG. 8, FIG. 10, and FIG. 11, after S303, the speech recognition method provided in this embodiment further includes S1401, which is specifically described as follows:

Further, after the inputting the target speech signal into a speech recognition model corresponding to the target language type, to obtain text information output by the speech recognition model, the method further includes:

S1401: Import the target speech signal into a training set corresponding to the target language type.

In this embodiment, after outputting the text information corresponding to the target speech signal, the terminal device may import the target speech signal and the corresponding text information into the training set, thereby implementing automatic extension of the training set.

In this embodiment of this application, a quantity of samples in the training set is increased in a manner of automatically marking the target language type of the target speech signal, thereby implementing automatically extending a sample set, and improving accuracy of a training operation.

It should be understood that sequence numbers of the steps do not mean execution sequences in the foregoing embodiments. The execution sequences of the processes should be determined based on functions and internal logic of the processes, and should not constitute any limitation on the implementation processes of the embodiments of this application.

Corresponding to the speech recognition method in the foregoing embodiments, FIG. 15 is a structural block diagram of a speech recognition apparatus according to an embodiment of this application. For ease of description, only a part related to the embodiments of this application is shown.

Referring to FIG. 15, the speech recognition apparatus includes:

a target speech signal obtaining unit 151, configured to obtain a to-be-recognized target speech signal;
a target language type recognition unit 152, configured to determine a target language type of the target speech signal; and
a speech recognition unit 153, configured to input the target speech signal into a speech recognition model corresponding to the target language type, to obtain text information output by the speech recognition model, where the real-time speech recognition model is obtained by training a training set including an original speech signal and an extended speech signal, and the extended speech signal is obtained by converting an existing text of a basic language type; and input the target speech signal into the speech recognition model corresponding to the target language type, to obtain the text information output by the speech recognition model.

The speech recognition model is obtained by training a training sample set, where the training sample set includes a plurality of extended speech signals, extended text information corresponding to each extended speech signal, an original speech signal corresponding to each extended speech signal, and original text information corresponding to each original speech signal, and the extended speech signal is obtained by converting an existing text of a basic language type.

Optionally, the speech recognition apparatus further includes:

an existing text obtaining unit, configured to obtain the existing text corresponding to the basic language type;
an extended speech text conversion unit, configured to convert the existing text into an extended speech text corresponding to the target language type; and
an extended speech signal generation unit, configured to generate, based on a speech synthesis algorithm, the extended speech signal corresponding to the extended speech text.

Optionally, the speech recognition apparatus further includes:

an asynchronous speech recognition model configuration unit, configured to train a first native speech model by using the original speech signal and an original language text corresponding to the original speech signal in the training set, to obtain an asynchronous speech recognition model;
a pronunciation probability matrix output unit, configured to output, based on the asynchronous speech recognition model, a pronunciation probability matrix corresponding to the extended speech signal; and
a real-time speech recognition model configuration unit, configured to train a second native speech model based on the pronunciation probability matrix and the extended speech signal, to obtain a real-time speech recognition model.

Optionally, the real-time speech recognition model configuration unit includes:

a quasi-real-time speech model generation unit, configured to perform coarse-grained training on the second native speech model based on the pronunciation probability matrix and the extended speech signal, to obtain a quasi-real-time speech model; and
a real-time speech recognition model generation unit, configured to perform fine-grained training on the quasi-real-time speech model based on the original speech signal and the original language text, to obtain the real-time speech recognition model.

Optionally, the quasi-real-time speech model generation unit includes:

a prediction probability matrix generation unit, configured to import the extended speech signal into the second native speech model, and determine a prediction probability matrix corresponding to the extended speech signal;
a loss amount calculation unit, configured to import the pronunciation probability matrix and the prediction probability matrix into a preset loss function, and calculate a loss amount of the second native speech model; and
a quasi-real-time speech recognition model training unit, configured to adjust a network parameter in the second native speech model based on the loss amount, to obtain the quasi-real-time speech recognition model.

Optionally, the loss function is specifically:

$$\begin{cases} Loss_{top\_k} = -\dfrac{1}{T}\sum_{t=1}^{T}\sum_{c=1}^{C} \widehat{y}_c^t \cdot \log(p_c^t) \\ \widehat{y}_c^t = \begin{cases} y_c^t \Rightarrow \arg\underset{c}{sort}(y_c^t) \le K \\ 0 \Rightarrow else \end{cases} \end{cases},$$

where

$Loss_{top\_k}$ is the loss amount; $p_c^t$ is a probability value that is of a c$^{th}$ pronunciation corresponding to a t$^{th}$ frame in the extended speech signal and that is in the prediction probability matrix; $\widehat{y}_c^t$ is a probability value that is of the c$^{th}$ pronunciation corresponding to the t$^{th}$ frame in the extended speech signal and that is in the pronunciation probability matrix processed by using an optimization algorithm; T is a total quantity of frames; C is a total quantity of pronunciations recognized in the t$^{th}$ frame; $y_c^t$ is a probability value that is of the c$^{th}$ pronunciation corresponding to the t$^{th}$ frame in the extended speech signal and that is in the pronunciation probability matrix; $\arg\underset{c}{sort}(y_c^t)$ is a sequence number corresponding to the c$^{th}$ pronunciation after all pronunciations that correspond to the t$^{th}$ frame in the extended speech signal and that are in the pronunciation probability matrix are sorted in descending order of probability values; and K is a preset parameter.

Optionally, there are more first network layers in the asynchronous speech recognition model than second network layers in the real-time speech recognition model.

Optionally, the speech recognition unit 153 is further configured to:

divide the target speech signal into a plurality of audio frames;

perform discrete Fourier transform on each audio frame to obtain a speech spectrum corresponding to each audio frame; and

import, based on a frame number, the speech spectrum corresponding to each audio frame into the real-time speech recognition model, and outputting the text information.

Optionally, the speech recognition apparatus further includes:
a training set extending unit, configured to import the target speech signal into a training set corresponding to the target language type.

Therefore, according to the speech recognition apparatus provided in this embodiment of this application, a basic language text with a relatively large quantity of samples is converted into an extended speech signal, and a real-time speech recognition model corresponding to a target language type is trained by using an original speech signal and an extended speech signal that correspond to the target language type. In addition, speech recognition is performed on a target speech signal by using the trained real-time speech recognition model, to output text information. In this way, a quantity of samples required for training a real-time speech recognition model of a non-basic language can be increased, to improve accuracy and applicability of speech recognition.

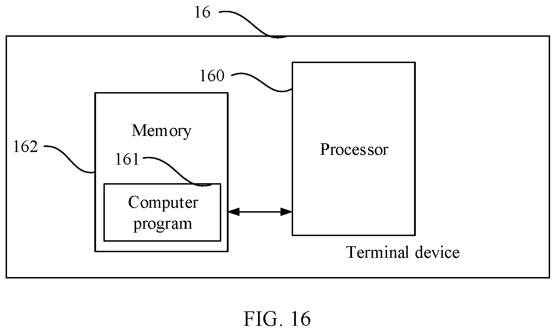

FIG. 16 is a schematic structural diagram of a terminal device according to an embodiment of this application. As shown in FIG. 16, the terminal device 16 in this embodiment includes: at least one processor 160 (only one processor is shown in FIG. 16), a memory 161, and a computer program 162 that is stored in the memory 161 and can run on the at least one processor 160. When executing the computer program 162, the processor 160 implements steps in any of the foregoing speech recognition method embodiments.

The terminal device 16 may be a computing device such as a desktop computer, a notebook computer, a palmtop computer, or a cloud server. The terminal device may include but is not limited to the processor 160 and the memory 161. A person skilled in the art may understand that FIG. 16 is merely an example of the terminal device 16, and does not constitute a limitation on the terminal device 16. The terminal device 16 may include more or fewer components than those shown in the figure, or combine some components, or different components, for example, may further include an input/output device, a network access device, and the like.

The processor 160 may be a central processing unit (Central Processing Unit, CPU), the processor 160 may further be another general purpose processor, a digital signal processor (Digital Signal Processor, DSP), an application specific integrated circuit (Application Specific Integrated Circuit, ASIC), a field programmable gate array (Field-Programmable Gate Array, FPGA) or another programmable logic device, a discrete gate or a transistor logic device, or a discrete hardware component. The general purpose processor may be a microprocessor, or the processor may be any conventional processor, or the like.

In some embodiments, the memory 161 may be an internal storage unit of the terminal device 16, for example, a hard disk or a memory of the terminal device 16. In some other embodiments, the memory 161 may alternatively be an external storage device of the apparatus/terminal device 16, for example, a plug-in hard disk, a smart media card (Smart Media Card, SMC), a secure digital (Secure Digital, SD) card, or a flash card (Flash Card) disposed on the terminal device 16. Further, the memory 161 may include both an internal storage unit of the terminal device 16 and an external storage device. The memory 161 is configured to store an operating system, an application program, a boot loader (BootLoader), data, another program, for example, program code of the computer program. The memory 161 may be further configured to temporarily store data that has been output or is to be output.

It should be noted that content such as information exchange and an execution process between the foregoing apparatuses/units is based on a same concept as that in the method embodiments of this application. For specific functions and technical effects of the content, refer to the method embodiments. Details are not described herein again.

A person skilled in the art may clearly understand that, for the purpose of convenient and brief description, division into only the foregoing functional units and modules is used as an example for description. In an actual application, the foregoing functions can be allocated to different functional modules for implementation based on a requirement. In other words, an inner structure of an apparatus is divided into different functional modules to implement all or some of the functions described above. The functional units and modules in the embodiments may be integrated into one processing unit, or the units may exist alone physically, or two or more units may be integrated into one unit. The integrated units may be implemented in a form of hardware, or may be implemented in a form of software functional units. In addition, specific names of the functional units and modules are merely used to distinguish each other, and are not intended to limit the protection scope of this application. For a specific working process of the units and modules in the foregoing system, refer to a corresponding process in the foregoing method embodiments. Details are not described herein again.

An embodiment of this application further provides a network device. The network device includes at least one processor, a memory, and a computer program that is stored in the memory and that can run on the at least one processor. When executing the computer program, the processor implements steps in any one of the foregoing method embodiments.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product is run on a mobile terminal, the mobile terminal is enabled to implement the steps in the foregoing method embodiments when executing the computer program product.

When the integrated unit is implemented in the form of a software functional unit and sold or used as an independent product, the integrated unit may be stored in a computer-readable storage medium. Based on such an understanding, all or some of the processes of the method in the embodiments of this application may be implemented by a computer program indicating related hardware. The computer program may be stored in the computer-readable storage medium. When the computer program is executed by the processor, steps of the foregoing method embodiments may be implemented. The computer program includes computer program code. The computer program code may be in a source code form, in an object code form, in an executable file form, some intermediate forms, or the like. The computer-readable medium may include at least: any entity or apparatus capable of carrying the computer program code to a photographing apparatus/terminal device, a recording medium, a computer memory, a read-only memory (ROM, Read-Only Memory), a random access memory (RAM, Random Access Memory), an electrical carrier signal, an electrical signal, and a software distribution medium, for example, a USB flash drive, a removable hard disk, a magnetic disk, or an optical disc. In some jurisdictions, under legislation and patent practice, computer-readable medium may not be an electrical carrier signals or a telecommunications signal.

In the foregoing embodiments, descriptions of the embodiments have different focuses. For a part that is not described in detail or described in an embodiment, refer to related descriptions in other embodiments.

A person of ordinary skill in the art may be aware that units, algorithms, and steps in the examples described with reference to the embodiments disclosed in this specification can be implemented by electronic hardware or a combination of computer software and electronic hardware. Whether the functions are performed by hardware or software depends on a particular application and a design constraint of the technical solutions. A person skilled in the art may use different methods to implement the described functions for each particular application, but it should not be considered that the implementation goes beyond the scope of this application.

In the embodiments provided in this application, it should be understood that the disclosed apparatus/network device and method may be implemented in other manners. For example, the described apparatus/network device embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

It should be finally noted that the foregoing descriptions are merely specific implementations of this application. However, the protection scope of this application is not limited thereto. Any variation or replacement within the technical scope disclosed in this application shall fall within the protection scope of this application. Therefore, the protection scope of this application shall be subject to the protection scope of the claims.

**Claims**

1. A speech recognition method, comprising:

   obtaining a to-be-recognized target speech signal;
   determining a target language type of the target speech signal; and
   inputting the target speech signal into a speech recognition model corresponding to the target language type, to obtain text information output by the speech recognition model, wherein

the speech recognition model is obtained by training a training sample set, wherein the training sample set comprises a plurality of extended speech signals, extended text information corresponding to each extended speech signal, an original speech signal corresponding to each extended speech signal, and original text information corresponding to each original speech signal, and the extended speech signal is obtained by converting an existing text of a basic language type.

2. The method according to claim 1, wherein before the inputting the target speech signal into a speech recognition model corresponding to the target language type, to obtain text information output by the speech recognition model, the method further comprises:

   obtaining the existing text corresponding to the basic language type;
   converting the existing text into an extended speech text corresponding to the target language type; and
   generating the extended speech signal corresponding to the extended speech text.

3. The method according to claim 1, wherein before the inputting the target speech signal into a speech recognition model corresponding to the target language type, to obtain text information output by the speech recognition model, the method further comprises:

   training a first native speech model by using the original speech signal and an original language text corresponding to the original speech signal in the training set, to obtain an asynchronous speech recognition model;
   outputting, based on the asynchronous speech recognition model, a pronunciation probability matrix corresponding to the extended speech signal; and
   training a second native speech model based on the pronunciation probability matrix and the extended speech signal, to obtain a real-time speech recognition model.

4. The method according to claim 3, wherein the training a second native speech model based on the pronunciation probability matrix and the extended speech signal, to obtain a real-time speech recognition model comprises:

   performing coarse-grained training on the second native speech model based on the pronunciation probability matrix and the extended speech signal, to obtain a quasi-real-time speech model; and
   performing fine-grained training on the quasi-real-time speech model based on the original speech signal and the original language text, to obtain the real-time speech recognition model.

5. The method according to claim 4, wherein the performing coarse-grained training on the second native speech model based on the pronunciation probability matrix and the extended speech text, to obtain a quasi-real-time speech model comprises:

   importing the extended speech signal into the second native speech model, and determining a prediction probability matrix corresponding to the extended speech signal;
   importing the pronunciation probability matrix and the prediction probability matrix into a preset loss function, and calculating a loss amount of the second native speech model; and
   adjusting a network parameter in the second native speech model based on the loss amount, to obtain the quasi-real-time speech recognition model.

6. The method according to claim 5, wherein the loss function is specifically:

$$
\begin{cases}
Loss_{top\_k} = -\dfrac{1}{T}\sum_{t=1}^{T}\sum_{c=1}^{C}\widehat{y}_c^{\,t}\cdot\log(p_c^t) \\[2ex]
\widehat{y}_c^{\,t} = \begin{cases} y_c^t \Rightarrow \arg\underset{c}{sort}(y_c^t) \le K \\ 0 \Rightarrow else \end{cases}
\end{cases}
$$
,

wherein

$Loss_{top\_k}$ is the loss amount; $p_c^t$ is a probability value that is of a c$^{th}$ pronunciation corresponding to a t$^{th}$ frame in the extended speech signal and that is in the prediction probability matrix; $\widehat{y}_c^t$ is a probability value that is of the c$^{th}$ pronunciation corresponding to the t$^{th}$ frame in the extended speech signal and that is in the pronunciation probability matrix processed by using an optimization algorithm; T is a total quantity of frames; C is a total quantity of pronunciations recognized in the t$^{th}$ frame; $y_c^t$ is a probability value that is of the c$^{th}$ pronunciation corresponding to the t$^{th}$ frame in the extended speech signal and that is in the pronunciation probability matrix; $\underset{c}{\arg}\, sort(y_c^t)$ is a sequence number corresponding to the c$^{th}$ pronunciation after all pronunciations that correspond to the t$^{th}$ frame in the extended speech signal and that are in the pronunciation probability matrix are sorted in descending order of probability values; and K is a preset parameter.

7. The method according to claim 3, wherein there are more first network layers in the asynchronous speech recognition model than second network layers in the real-time speech recognition model.

8. The method according to any one of claims 1 to 7, wherein the inputting the target speech signal into a speech recognition model corresponding to the target language type, to obtain text information output by the speech recognition model comprises:

   dividing the target speech signal into a plurality of audio frames;
   performing discrete Fourier transform on each audio frame to obtain a speech spectrum corresponding to each audio frame; and
   importing, based on a frame number, the speech spectrum corresponding to each audio frame into the real-time speech recognition model, and outputting the text information.

9. The method according to any one of claims 1 to 7, wherein after the inputting the target speech signal into a speech recognition model corresponding to the target language type, to obtain text information output by the speech recognition model, the method further comprises:
   importing the target speech signal into a training set corresponding to the target language type.

10. A speech recognition apparatus, comprising:

   a target speech signal obtaining unit, configured to obtain a to-be-recognized target speech signal;
   a target language type recognition unit, configured to determine a target language type of the target speech signal; and
   a speech recognition unit, configured to input the target speech signal into a speech recognition model corresponding to the target language type, to obtain text information output by the speech recognition model, wherein the speech recognition model is obtained by training a training sample set, wherein the training sample set comprises a plurality of extended speech signals, extended text information corresponding to each extended speech signal, an original speech signal corresponding to each extended speech signal, and original text information corresponding to each original speech signal, and the extended speech signal is obtained by converting an existing text of a basic language type.

11. A terminal device, comprising a memory, a processor, and a computer program that is stored in the memory and that is run on the processor, wherein when executing the computer program, the processor implements the method according to any one of claims 1 to 9.

12. A computer-readable storage medium, wherein the computer-readable storage medium stores a computer program, and when the computer program is executed by a processor, the method according to any one of claims 1 to 9 is implemented.

110 — RF circuit

190 — Power supply

180 — Processor

120 — Memory

Near field communications module — 170

160 — Audio circuit

Speaker 161

Microphone 162

Sensor — 150

Input unit — 131

130 — Touch panel

Another input device

132

Display unit — 140

Display panel

141

FIG. 1

| Application layer | Messages | Calendar | Camera | Videos |
| | Navigation | Gallery | Phone | ... |

| Application framework layer | Window manager | Resource manager | Notification manager | ... |

| System layer | Sensor service module | Physical status recognition module | Three-dimensional graphics processing library | ... |

| Hardware abstraction layer | Display driver | Camera driver | Sensor driver | ... |

FIG. 2

S301

Obtain a to-be-recognized target speech signal

S302

Determine a target language type of the target speech signal

S303

Input the target speech signal into a speech recognition model corresponding to the target language type, to obtain text information output by the speech recognition model

FIG. 3

41

42

Target speech signal

Send the target speech signal

Feed back a speech recognition result

Mobile device

Speech recognition server

FIG. 4

```
Collect user
   speech          →    Target speech signal    →    Language type
                                                      recognition module
```

A recognition result          A recognition result          A recognition result
    is A language                  is B language              is a basic language

```
 A language            B language                Basic language
Real-time speech      Real-time speech    ···    Real-time speech
recognition module   recognition module          recognition module
```

A language            B language                Basic language
Text information     Text information    ···     Text information

FIG. 5

S601

Obtain an existing text corresponding to a basic language type

S602

Convert the existing text into an extended speech text corresponding to a target language type

S603

Generate an extended speech signal corresponding to the extended speech text

FIG. 6

| Mandarin | Cantonese |
|---|---|
| Text:<br>"我这里没有你想要的" | Text:<br>"我呢度有你想要嘅" |

Translation algorithm

Speech synthesis algorithm

FIG. 7

S801

Train a first native speech model by using an original speech signal and an original language text corresponding to the original speech signal in a training set, to obtain an asynchronous speech recognition model

S802

Output, based on the asynchronous speech recognition model, a pronunciation probability matrix corresponding to an extended speech signal

S803

Train a second native speech model based on the pronunciation probability matrix and the extended speech signal, to obtain a real-time speech recognition model

FIG. 8

One fully connected layer

Nine BiRNN layers

Three CNN layers

One frequency feature extraction layer

Asynchronous speech recognition model

One fully connected layer

Five BiRNN layers

Two CNN layers

One frequency feature extraction layer

Real-time speech recognition model

FIG. 9

S1001

Perform coarse-grained training on a second native speech model based on a pronunciation probability matrix and an extended speech signal, to obtain a quasi-real-time speech model

S1002

Perform fine-grained training on the quasi-real-time speech model based on an original speech signal and an original language text, to obtain a real-time speech recognition model

FIG. 10

S1101

Import an extended speech signal into a second native speech model, and determine a prediction probability matrix corresponding to the extended speech signal

S1102

Import a pronunciation probability matrix and the prediction probability matrix into a preset loss function, and calculate a loss amount of the second native speech model

S1103

Adjust a network parameter in the second native speech model based on the loss amount, to obtain a quasi-real-time speech recognition model

FIG. 11

FIG. 12

S1301

Divide a target speech signal into a plurality of audio frames

S1302

Perform discrete Fourier transform on each audio frame to obtain a speech spectrum corresponding to each audio frame

S1303

Import, based on a frame number, the speech spectrum corresponding to each audio frame into a real-time speech recognition model, and output text information

FIG. 13

S303

Output text information of a target speech signal by using a real-time speech recognition model corresponding to a target language type

S1401

Import the target speech signal into a training set corresponding to the target language type

FIG. 14

151

Target speech signal obtaining unit

152

Target language type recognition unit

153

Speech recognition unit

FIG. 15

16

160

162

Memory

161

Computer
program

Processor

Terminal device

FIG. 16

<table>
<tr><td colspan="2" align="center"><b>INTERNATIONAL SEARCH REPORT</b></td><td>International application No.<br><br><b>PCT/CN2020/125608</b></td></tr>
</table>

**A.    CLASSIFICATION OF SUBJECT MATTER**

G10L 15/06(2013.01)i;  G10L 15/00(2013.01)i

According to International Patent Classification (IPC) or to both national classification and IPC

**B.    FIELDS SEARCHED**

Minimum documentation searched (classification system followed by classification symbols)

G10L

Documentation searched other than minimum documentation to the extent that such documents are included in the fields searched

Electronic data base consulted during the international search (name of data base and, where practicable, search terms used)

VEN, CNABS, CNTXT: 语音, 语言, 方言, 外语, 声音, 目标, 识别, 训练, 模型, 文本, 扩展, 原始, 初始, 概率, 矩阵, 损失, 丢失, 函数, 傅里叶变换, FFT, speech, voice, accent, foreign w language+, recognize, model , text, train+, loss, function, extend+

**C.    DOCUMENTS CONSIDERED TO BE RELEVANT**

| Category* | Citation of document, with indication, where appropriate, of the relevant passages | Relevant to claim No. |
|---|---|---|
| PX | CN 111261144 A (HUAWEI TECHNOLOGIES CO., LTD.) 09 June 2020 (2020-06-09)<br>    claims 1-12 | 1-12 |
| Y | CN 107731228 A (BAIDU ONLINE NETWORK TECHNOLOGY (BEIJING) CO., LTD.) 23 February 2018 (2018-02-23)<br>    description, paragraphs [0028]-[0079], and figures 1-5 | 1-2, 8-12 |
| Y | CN 109003601 A (BEIJING TECHNOLOGY AND BUSINESS UNIVERSITY) 14 December 2018 (2018-12-14)<br>    description, paragraphs [0009]-[0018], figure 1 | 1-2, 8-12 |
| A | CN 110148400 A (TENCENT TECHNOLOGY SHENZHEN CO., LTD.) 20 August 2019 (2019-08-20)<br>    entire document | 1-12 |
| A | CN 110473523 A (BEIJING DA MI TECHNOLOGY CO., LTD.) 19 November 2019 (2019-11-19)<br>    entire document | 1-12 |
| A | CN 110148403 A (TENCENT TECHNOLOGY SHENZHEN CO., LTD.) 20 August 2019 (2019-08-20)<br>    entire document | 1-12 |

☑ Further documents are listed in the continuation of Box C.     ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"    document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **13 January 2021** | **28 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/125608**

**C.    DOCUMENTS CONSIDERED TO BE RELEVANT**

| Category* | Citation of document, with indication, where appropriate, of the relevant passages | Relevant to claim No. |
|---|---|---|
| A | CN 110197658 A (BAIDU ONLINE NETWORK TECHNOLOGY (BEIJING) CO., LTD.) 03 September 2019 (2019-09-03)<br>entire document | 1-12 |
| A | US 2013070928 A1 (ELLIS DANIEL P W et al.) 21 March 2013 (2013-03-21)<br>entire document | 1-12 |
| A | US 2017162194 A1 (CONEXANT SYSTEMS INC.) 08 June 2017 (2017-06-08)<br>entire document | 1-12 |
| A | CN 107945792 A (BAIDU ONLINE NETWORK TECHNOLOGY (BEIJING) CO., LTD.) 20 April 2018 (2018-04-20)<br>entire document | 1-12 |

Form PCT/ISA/210 (second sheet) (January 2015)

**INTERNATIONAL SEARCH REPORT**
Information on patent family members

International application No.

**PCT/CN2020/125608**

| Patent document cited in search report | | | Publication date (day/month/year) | Patent family member(s) | | | Publication date (day/month/year) |
|---|---|---|---|---|---|---|---|
| CN | 111261144 | A | 09 June 2020 | None | | | |
| CN | 107731228 | A | 23 February 2018 | US | 10755701 | B2 | 25 August 2020 |
| | | | | US | 2019088253 | A1 | 21 March 2019 |
| CN | 109003601 | A | 14 December 2018 | None | | | |
| CN | 110148400 | A | 20 August 2019 | None | | | |
| CN | 110473523 | A | 19 November 2019 | None | | | |
| CN | 110148403 | A | 20 August 2019 | CN | 110428819 | A | 08 November 2019 |
| CN | 110197658 | A | 03 September 2019 | None | | | |
| US | 2013070928 | A1 | 21 March 2013 | None | | | |
| US | 2017162194 | A1 | 08 June 2017 | US | 10347271 | B2 | 09 July 2019 |
| CN | 107945792 | A | 20 April 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911409041